(19) Europäisches Patentamt
European Patent Office
Office européen des brevets

(11) Publication number: **0 555 486 A1**

(12) # EUROPEAN PATENT APPLICATION published in accordance with Art. 158(3) EPC

(21) Application number: **92916517.3**

(22) Date of filing: **03.08.92**

(86) International application number: **PCT/JP92/00984**

(87) International publication number: **WO 93/03482 (18.02.93 93/05)**

(51) Int. Cl.5: **G11B 23/00**, G11B 7/24, G11B 5/82

(30) Priority: **02.08.91 JP 194534/91**
**13.04.92 JP 119713/92**
**17.04.92 JP 98194/92**

(43) Date of publication of application: **18.08.93 Bulletin 93/33**

(84) Designated Contracting States: **DE FR GB IT NL**

(71) Applicant: **MITSUI PETROCHEMICAL INDUSTRIES, LTD.**
**2-5, Kasumigaseki 3-chome Chiyoda-ku**
**Tokyo 100(JP)**

(72) Inventor: **KURISU, Masayoshi, Mitsui Petrochemical Ind. Ltd.**
**580-32, Aza-Taku 2-gou, Nagaura**
**Sodegaura-shi, Chiba 299-02(JP)**
Inventor: **OKUBO, Atsushi, Mitsui Petrochemical Ind. Ltd.**
**580-32, Aza-Taku 2-gou, Nagaura,**
**Sodegaura-shi, Chiba 299-02(JP)**
Inventor: **MIZUMOTO, Kunihiko, Mitsui Petrochemical Ind. Ltd.**
**580-32, Aza-Taku 2-gou, Nagaura**
**Sodegaura-shi, Chiba 299-02(JP)**
Inventor: **HASHIMOTO, Hidehiko, Mitsui Petrochemical Ind. Ltd**
**580-32, Aza-Taku 2-gou, Nagaura**
**Sodegaura-shi, Chiba 299-02(JP)**

(74) Representative: **Nicholls, Michael John**
**J.A. Kemp & Co., 14, South Square, Gray's Inn**
**London WC1R 5LX (GB)**

(54) **HUB FOR OPTICAL RECORDING MEDIUM AND OPTICAL RECORDING MEDIUM.**

(57) A hub (67) for an optical recording medium (61) comprises a metal member (67a) to be attracted by a clamping magnet (95) on a turn-table of an optical disk drive device (91), and a resin member (67b) having a center hole (77) for receiving a spindle (93) of the drive device (91). An inner peripheral portion ($S_8$) and hole peripheral portion ($S_9$,$S_{18}$) of the center hole (77) are made of a resin as a whole. The section (72a) of the insertion portion of the center hole (77) of the hub (67) is expanded either linearly or in an arcuate form of a small radius towards the open end so as to prevent wear and deformation of the center hole (77) when the hub is attached to or removed from the drive device (91).

EP 0 555 486 A1

*Fig. 4*

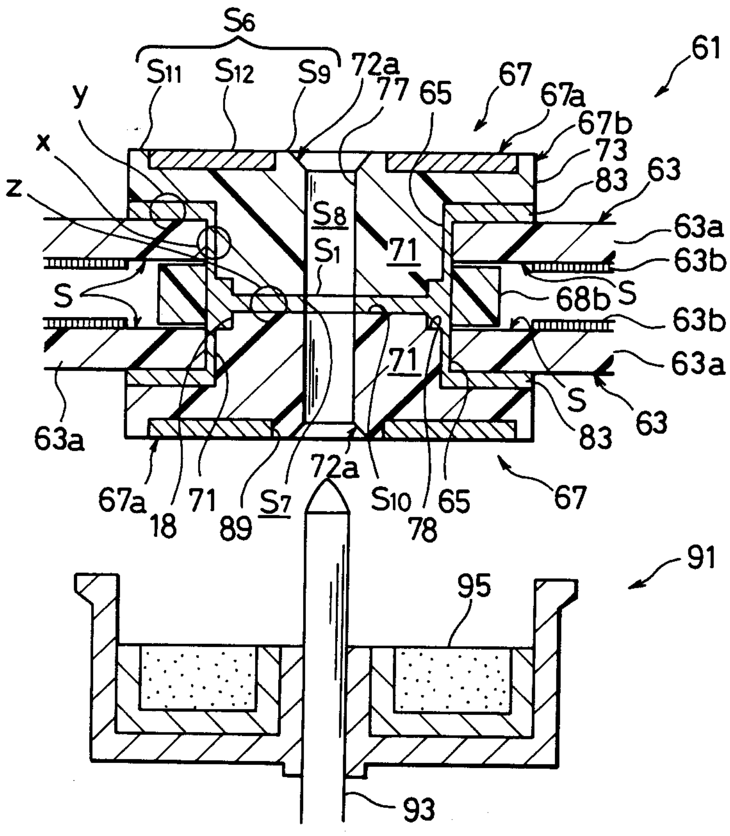
S6
S11
S12
S9
72a
77
65
67
67a
61
y
67b
x
73
83
63
z
S8
63a
S1
71
63b
S
68b
S
S
63b
71
63a
S
63a
83
63
72a
67
67a
18
71
89
S7
S10
78
65
91
95
93

## TECHNICAL FIELD

The present invention relates to hubs for optical recording media and the optical recording media. More particularly, the invention relates to hubs for optical recording media and the optical recording media, both of them being so designed that any enlargement or deformation of a center hole into which a spindle of an optical disk driving device is inserted does not take place and excellent loading properties are maintained, even when the optical recording medium is repeatedly loaded on and unloaded from the driving device.

## BACKGROUND ART

Optical recording media, so-called "optical disk memories", have a future possibility of being used in a great variety of applications because of their characteristics such as large memory capacity and portability, and in recent years extensive researches and developments of the optical recording media have been conducted. Optical recording media (optical disks, optical disk media, optical disk media) which have been put into practical use include those of Read-Only type such as compact disk (CD) and CD-ROM, those of Write-Once type capable of recording information but incapable of erasing the recorded information, and those of Re-Writable type capable of optionally recording and erasing information.

As driving devices for the optical recording media, there are known those of magnet clamp system in which a magnetic clamp type optical recording medium comprising a disk substrate body with a recording layer and a hub with a metallic portion provided on the center of said substrate body is held by attracting the metallic portion by a magnet which is provided on the driving device, and the optical recording medium is driven by the device. The optical recording media capable of being driven by this optical disk driving device include those of single plate type comprising one disk substrate body having a central opening and a hub fitted into the central opening and those of laminated type comprising plural disk substrate bodies laminated together and a pair of hubs fitted into the central openings of the substrate bodies from both sides thereof.

The hubs conventionally used for the optical recording media of single plate type and laminated type include a metallic hub entirely made of metal and a composite type hub composed of a resin member and a metallic member which are bonded to each other. The conventional composite type hub generally comprises a column-like or cylindrical portion to be inserted into the central opening and a metal plate fixed to the cylindrical portion, and a center hole into which a spindle of the driving device is inserted is provided in the metal plate.

For example, as shown in Fig. 38, a single plate type optical recording medium B having the conventional composite type hub comprises a disk substrate body 3 with an information recording layer 1 and a composite type hub 5 provided with a metallic member 5a for fitting the substrate body 3 to the disk driving device. As shown in Fig. 39, the hub 5 has a resin body comprising a cylindrical portion 7 and a flange portion 8 extended outward from one end of the cylindrical portion 7. The metallic member 5a is an annular plate, and an outer edge of the metallic member is embedded in the other end of the resin body to fix the metallic member to the resin body. The hub 5 and the disk substrate body 3 are bonded to each other by means of an adhesive layer 11 formed between a central opening 9 of the disk substrate body 3 and the cylindrical portion 7 fitted into the opening 9 and between a surface of the disk substrate body 3 and the flange portion 8 put on said surface. The metallic member 5a has a center hole 13 into which the spindle of the optical disk driving device is inserted, and the metallic member 5a is attracted by the magnet of the driving device in such a state that the spindle is being inserted into the center hole 13.

In the optical recording medium B, however, since the center hole 13 of the hub 5 into which a spindle of the driving device is inserted is formed in the metallic member 5a, there is such a problem that the center hole 13 is made larger or deformed by abrasion or collision with the spindle when the recording medium (substrate) B is repeatedly loaded on and unloaded from the driving device, whereby error in reading of the recorded information takes place. Especially, when the recording medium is subjected to loading and unloading operations of as many as several hundred thousands times using an automatic loading and unloading device (autochanger), there is a high possibility of occurrence of error in the information reading procedure owing to the deformation of the center hole 13.

The present invention is intended to solve the problems associated with the prior art, and an object of the invention is to provide hubs for optical recording media and the optical recording media, both of which are free from deformation of the center hole into which the spindle is inserted, said deformation being caused by loading and unloading operation of the disk substrate on and off the driving device, also free from occurrence of poor loading performance, and are able to endure the loading and unloading operations of as many as several hundred thousands times.

SUMMARY OF INVENTION

The hub for optical recording medium (hub for optical disk medium) of the present invention is characterized in that the hub comprises a metallic member capable of being attracted by a magnet of an optical disk driving device and a resin member having a center hole into which a spindle of the driving device is inserted, and an inner peripheral portion and an opening edge portion of the center hole are all made of resin.

One preferred embodiment of the hub for optical recording medium according to the invention is a hub which comprises a resin member having a cylindrical portion, a flange portion extended outward from the cylindrical portion, and a bottom portion blockading one end of the cylindrical portion and having a center hole into which a spindle of an optical disk driving device is inserted, and an annular metallic member being an annular body embedded in the bottom portion of the resin member with surrounding the center hole and capable of being attracted by a magnet of the optical disk driving device, wherein:

an inner peripheral portion and an opening edge portion of the center hole in the bottom portion of the resin member are all made of resin.

Another preferred embodiment of the hub for optical recording medium according to the invention is a hub which comprises a resin member having a column-like portion, a flange portion extended outward from the column-like portion, and a center hole penetrating the column-like portion and opening at both end surfaces thereof into which a spindle of an optical disk driving device is inserted, and an annular metallic member being an annular body embedded in one end surface of the column-like portion with surrounding the center hole and capable of being attracted by a magnet of the optical disk driving device, wherein:

an inner peripheral portion and an opening edge portion of the center hole in the column-like portion of the resin member are all made of resin.

The optical recording medium (optical disk medium) of the present invention is an optical recording medium comprising an optical disk substrate body (optical disk substrate body) with a recording layer and a hub fitted into a central opening provided in the optical disk substrate body, wherein:

the hub comprises a metallic member capable of being attracted by a magnet of an optical disk driving device and a resin member having a center hole into which a spindle of the driving device is inserted, and an inner peripheral portion and an opening edge portion of the center hole in the metallic member and the resin member are all made of resin.

One preferred embodiment of the optical recording medium according to the invention is an optical recording medium which comprises a disk substrate body with a recording layer and a hub fitted into a central opening provided in the disk substrate body, wherein:

the hub comprises a resin member having a cylindrical portion inserted into the central opening of the disk substrate body, a flange portion extended outward from the cylindrical portion to cover a circumferential edge surface of the central opening, and a bottom portion blockading one end of the cylindrical portion and having a center hole into which a spindle of an optical disk driving device is inserted, and an annular metallic member being an annular body embedded in the bottom portion of the resin member with surrounding the center hole and capable of being attracted by a magnet of the optical disk driving device; and

an inner peripheral portion and an opening edge portion of the center hole in the bottom portion of the resin member are all made of resin.

Another preferred embodiment of the optical recording medium according to the invention is an optical recording medium which comprises plural (preferably two) disk substrate bodies laminated one upon another at least one of which has a recording layer and two hubs fitted into central openings provided in the disk substrate bodies from both sides thereof, wherein:

the hub comprises a resin member having a column-like portion inserted into the central opening of the disk substrate body, a flange portion extended outward from the column-like portion to cover a circumstantial edge surface of the central opening, and a center hole penetrating the column-like portion and opening at both end surfaces thereof into which a spindle of an optical disk driving device is inserted, and an annular metallic member being an annular body embedded in an outward end surface of the column-like portion with surrounding the center hole and capable of being attracted by a magnet of the optical disk driving device; and

an inner peripheral portion and an opening edge portion of the center hole in the column-like portion of the resin member are all made of resin.

In a hub for an optical recording medium according to the invention which has a center hole into which a spindle of a disk driving device is inserted and is capable of being attracted by a clamping magnet provided on a turn table of the disk driving device, it is preferred that an insertion opening portion of the

center hole is sectionally extended straight toward the opening end.

In the invention, a difference between a radius of the opening end of the insertion opening portion and a radius of the center hole (namely, width of chamfered portion) is preferably in the range of 0.02 to 2.0 mm, more preferably 0.1 to 0.5 mm. Further, an external angle between an extending surface of the insertion opening portion and an upper surface of the hub is preferably in the range of 10 to 80°, more preferably 30 to 80°, most preferably 50 to 80°.

In a hub for optical recording medium according to the invention which has a center hole into which a spindle of a disk driving device is inserted and is capable of being attracted by a clamping magnet provided on a turn table of the disk driving device, it is preferred that an insertion opening portion of the center hole is sectionally extended in the form of an arc toward the opening end at a curvature radius (R) of more than 0.2 mm and not more than 2.0 mm, preferably in the range of 0.3 mm to 0.5 mm.

In the invention, moreover, the spindle insertion opening portion and/or the inner peripheral portion of the center hole is preferably made of resin.

In the invention, furthermore, a lubricant layer is preferably provided on the extending surface of the spindle insertion opening portion or in the vicinity thereof.

The optical recording media of the invention are provided with such hubs as mentioned above.

According to the hubs for optical recording medium and the optical recording media of the present invention, the inner peripheral portion and the opening edge circumferential portion of the center hole in the composite type hub comprising the metallic member and the resin member are all made of resin, and therefore the metallic member is not brought into contact with a spindle when the optical recording medium is loaded on or unloaded from the driving device. Accordingly, the center hole is not made larger or deformed during the loading and unloading operation of the disk substrate caused by abrasion and collision with the spindle.

In the case of the hub of the invention in which the insertion opening portion of the center hole is sectionally extended straight or in the form of an arc at a specific radius toward the opening end, the hub shows excellent loading performance even after it is repeatedly used.

## BRIEF DESCRIPTION OF DRAWINGS

Fig. 1 is an enlarged fragmentary view showing an essential part of an optical recording medium in a first embodiment of the invention which is about to be fitted on a driving device. Fig. 2 is a sectional view of the optical recording medium in the first embodiment of the invention. Fig. 3 is a perspective view of a hub for the optical recording medium in the first embodiment of the invention. Fig. 4 is an enlarged fragmentary view showing an essential part of an optical recording medium in a second embodiment of the invention which is about to be fitted on the driving device. Fig. 5 is a sectional view of the optical recording medium in the second embodiment of the invention. Fig. 6 is a sectional view of an optical recording medium in a third embodiment of the invention. Fig. 7 is a perspective view of a hub viewed from the inward end surface side, said hub being for the optical recording media in the second and third embodiments of the invention. Fig. 8 is a perspective view of a hub viewed from the outward end surface side, said hub being for the optical recording media in the second and third embodiments of the invention. Fig. 9 is a sectional view of an optical recording medium in a fourth embodiment of the invention. Fig. 10 is a perspective view of a hub for the optical recording medium in the fourth embodiment of the invention. Fig. 11 is a sectional view of an optical recording medium in a fifth embodiment of the invention. Fig. 12 is a sectional view of an optical recording medium in a sixth embodiment of the invention. Fig. 13 is a perspective view of a hub viewed from the bottom, said hub being for the optical recording medium in the fifth embodiment of the invention. Fig. 14 is a perspective view of a hub viewed from the top, said hub being for the optical recording medium in the fifth embodiment of the invention. Fig. 15 is an enlarged fragmentary view showing an essential part of the optical recording medium in the fifth embodiment of the invention which is about to be fitted on a driving device. Fig. 16 is a sectional view of an optical recording medium in a seventh embodiment of the invention, said optical recording medium being a laminated type optical recording medium which has no such a concave portion as in the optical recording medium of Fig. 11 provided for fitting an annular metallic member to the outward end surface of the hub. Fig. 17 is a sectional view of an optical recording medium in an eighth embodiment of the invention, said optical recording medium being an air-sandwich type optical recording medium which has no such a concave portion as in the optical recording medium of Fig. 12. Fig. 18 is to show sectional views of the optical recording medium in the fifth embodiment of the invention, a disk cartridge and a disk drive, and an enlarged longitudinal sectional view of a spindle insertion opening portion which is chamfered. Fig. 19 is a front view of the optical disk cartridge shown in Fig. 18. Fig. 20 is to show sectional views of insertion opening portions of hubs for optical recording media according to the

invention. Fig. 20 (a) is a sectional view of an insertion opening portion of a hub, wherein an external angle between an extending surface of said insertion opening portion and an upper surface of the hub is 45°. Fig. 20 (b) is a sectional view of an insertion opening portion of a hub, wherein an external angle between an extending surface of said insertion opening portion and an upper surface of the hub is 56°. Fig. 20 (c) is a sectional view of an insertion opening portion of a hub, wherein an external angle between an extending surface of said insertion opening portion and an upper surface of the hub is 63°. Figs. 21 (a) and 21 (b) are sectional views showing insertion opening portions of center holes of variously shaped metal hubs for optical recording media in a ninth embodiment and a tenth embodiment of the invention. Fig. 22 (a) and Fig. 22 (b) are sectional views of insert hubs each provided with a metal ring in the center thereof by means of insert molding (an eleventh embodiment and a twelfth embodiment). Fig. 23 is a sectional view of a single plate type optical recording medium which is a thirteenth embodiment of the invention. Fig. 24 is a sectional view of a single plate type optical recording medium which is a thirteenth embodiment of the invention. Fig. 25 is a sectional view of an optical recording medium in a fourteenth embodiment of the invention. Fig. 26 is a sectional view of an optical recording medium in a fifteenth embodiment of the invention. Fig. 27 is a perspective view of a hub viewed from the bottom, said hub being used for the optical recording medium in the fourteenth embodiment of the invention. Fig. 28 is a perspective view of a hub viewed from the top, said hub being used for the optical recording medium in the fourteenth embodiment of the invention. Fig. 29 is an enlarged fragmentary view showing an essential part of the optical recording medium in the fourteenth embodiment of the invention which is about to be fitted on the driving device. Fig. 30 is a sectional view of an optical recording medium in a sixteenth embodiment of the invention, said optical recording medium being a laminated type optical recording medium which has no such a concave portion as in the optical recording medium of Fig. 25 provided for fitting an annular metallic member to the outward end surface of the hub. Fig. 31 is a sectional view of an optical recording medium in a seventeenth embodiment of the invention, said optical recording medium being an air-sandwich type optical recording medium which has no such a concave portion as in the optical recording medium of Fig. 26. Fig. 32 is to show sectional views of the optical recording medium in the fourteenth embodiment of the invention, a disk cartridge and a disk drive, and an enlarged longitudinal sectional view of a spindle insertion opening portion which is chamfered. Fig. 33 is to show sectional views of insertion opening portions of hubs for the optical recording medium in the fourteenth embodiment of invention. Fig. 33 (A) is a sectional view of an insertion opening portion of a hub, said insertion opening portion having a curvature radius of 0.3 mm. Fig. 33 (B) is a sectional view of an insertion opening portion of a hub, said insertion opening portion having a curvature radius of 0.5 mm. Figs. 34 (a) and 34 (b) are sectional views showing insertion opening portions of center holes of variously shaped metal hubs for optical recording media in an eighteenth embodiment and a nineteenth embodiment of the invention. Fig. 35 (a) and Fig. 35 (b) are sectional views of insert hubs each provided with a metal ring in the center thereof by means of insert molding (a twentieth embodiment and a twenty-first embodiment). Fig. 36 is a sectional view of essential parts of a single plate type optical recording medium which is a twenty-second embodiment of the invention. Fig. 37 is a sectional view of the single plate type optical recording medium in the twenty-second embodiment of the invention. Fig. 38 is a sectional view of a conventional optical recording medium. Fig. 39 is a perspective view of a conventional hub for optical recording medium.

| | |
|---|---|
| 21: | optical recording medium |
| 23: | disk substrate body |
| 23b: | information recording layer |
| 25: | central opening |
| 27: | hub for optical recording medium |
| 27a: | metallic member |
| 27b: | resin body |
| 31: | cylindrical portion |
| 33: | flange portion |
| 35: | bottom portion |
| 37: | center hole |
| s: | surface of resin substrate |
| s1: | inner peripheral portion of center hole |
| s2: | circumferential portion of center hole |
| s3: | circumferential portion of center hole |
| s4: | outer peripheral portion of bottom surface |
| s5: | exposed portion |
| 51: | optical disk driving device |
| 53: | spindle of optical disk driving device |

| | |
|---|---|
| 55: | magnet of optical disk driving device |
| 61: | optical recording medium (optical disk plate) |
| 63: | disk substrate body |
| 63b: | information recording layer |
| 65: | central opening |
| 67, 167, 267: | hub for optical recording medium |
| 67a: | metallic member |
| 67b: | resin body |
| 71: | column-like portion |
| 72: | opening end |
| 72a: | extending surface |
| 73: | flange portion |
| 77: | center hole |
| s8: | inner peripheral portion of center hole |
| s9: | circumferential portion of center hole |
| s10: | circumferential portion of center hole |
| s11: | outer peripheral portion of bottom surface |
| s12: | exposed portion |
| 91: | optical disk driving device |
| 93: | spindle of optical disk driving device |
| 95: | magnet of optical disk driving device |
| 100: | insertion opening portion |
| 101: | information recording layer |
| 103: | disk substrate body |
| 105: | hub for optical recording medium |
| 105a: | metallic member |
| 105b: | resin body |
| 107: | cylindrical portion |
| 108: | flange portion |
| 109: | central opening |
| 113: | center hole |
| 114: | flange |
| 115: | cylindrical resin body |
| R: | curvature radius |

## BEST MODE FOR CARRYING OUT THE INVENTION

The hubs for optical recording media and the optical recording media according to the invention are described below referring to the attached drawings.

Fig. 1 is an enlarged fragmentary view showing an essential part of an optical recording medium in a preferred first embodiment of the invention which is about to be fitted on a driving device. Fig. 2 is a sectional view of the optical recording medium in this embodiment of the invention. Fig. 3 is a perspective view of a hub for the optical recording medium in this embodiment of the invention.

As shown in Fig. 1 and Fig. 2, an optical recording medium 21 in the first embodiment of the invention is a single plate type optical recording medium, and the medium has a disk substrate body 23 and a hub 27 fitted into an central opening 25 of the disk substrate body 23.

The disk substrate body 23 has a resin substrate 23a and a recording layer 23b provided on one surface s of the resin substrate 23a.

The resin substrate 23a may be formed from any resin materials conventionally known, for example, polymethyl methacrylate, polycarbonate, and random copolymers of ethylene and cycloolefins (e.g., tetracyclododecene, methylcyclotetradodecene and norbornene).

The substrate materials preferably used are those having an intrinsic viscosity [$\eta$], as measured in decalin at 135 °C, of 0.05 to 10 dl/g, for example:

(a) cycloolefin random copolymers of ethylene and cycloolefins represented by the following formula [1], and

(b) polyolefins formed by ring opening polymerization of cycloolefins represented by the following formula [1] or hydrogenation products of the polyolefins.

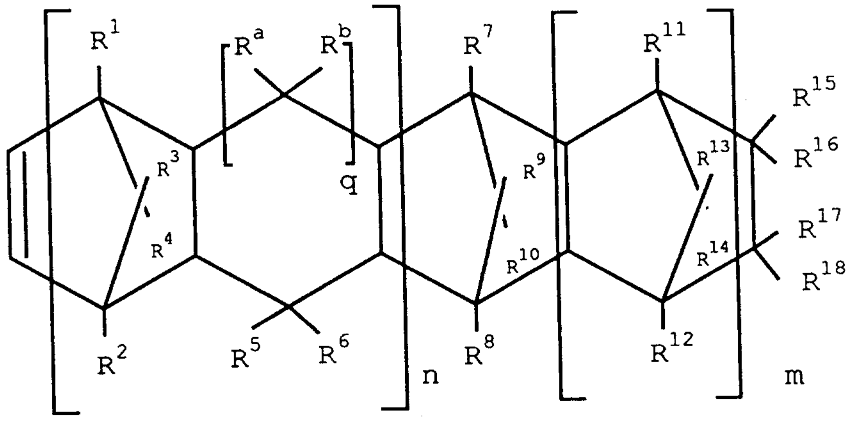

[1]

(In the formula [1], n is 0 or 1; m is 0 or a positive integer; q is 0 or 1; $R^1$ - $R^{18}$, $R^a$ and $R^b$ are individually a hydrogen atom, a halogen atom or a hydrocarbon group. $R^1$ - $R^{18}$ may be linked together to form a monocyclic ring or a polycyclic ring, and the monocyclic ring or polycyclic ring may have double bond. $R^{15}$ and $R^{16}$, or $R^{17}$ and $R^{18}$ may together form an alkylidene group. When q is 0, $R^a$ and $R^b$ are linked to each other to form a 5-membered ring.)

The recording layer 23b of the disk substrate body 23 is a recording material layer or a laminate comprising a recording material layer and one or two or more layers selected from a protective layer made of inorganic or organic material (e.g., SiNx and ultraviolet curable resin), an enhancing layer, a reflecting layer, a good heat conductive layer (e.g., Al alloy), an interference layer and an anti-reflecting layer, which are provided on and/or below the recording material layer depending on necessity. In the first embodiment, it is preferred that a protective layer made of organic material (e.g., ultraviolet curing resin) or inorganic material is provided as the outermost layer. Particularly, on the substrate 23a is preferably provided the recording layer 23b consisting of a SiN protective layer / a recording material layer / a SiN protective layer / an Al alloy layer / an ultraviolet curing resin layer, said layers being laminated in this order. There is no specific limitation on the materials for forming the recording material layer as far as they are optical recording materials, and there can be used any recording materials such as for Read-Only type (e.g., a compact disk (CD) and CD-ROM), those for Write-Once type capable of recording information but incapable of erasing recorded information and those for Re-Writable type capable of optionally recording or erasing information. Examples of the recording materials include magnetooptical recording materials such as alloys containing rare earth element and 3d transition metal (e.g., Tb•Fe•Co) and alloys containing rare earth element, 3d transition metal and corrosion resistant metal (e.g., Tb•Fe•Co plus Pt or Pd); organic dye materials such as cyanine dye and naphthalocyanine dye; low-melting metallic materials such as Te, Te-C-H and Te-Cr-C-H; and disk substrates having pits formed thereon corresponding to signals. Among the recording layers of those materials, the magnetooptical recording material layer is particularly preferred.

Into a central opening 25 of the disk substrate body 23 is fitted a hub 27. As shown in Fig. 3, the hub 27 has a resin body 27b comprising a cylindrical portion 31, a flange portion 33 extended outward from one end of the cylindrical portion 31 and a bottom portion 35 blockading the other end of the cylindrical portion. In the bottom portion 35 is formed a center hole 37 into which a spindle 53 of a driving device 51 is inserted, and the periphery of the center hole 37 forms a cylindrical boss 38.

On the outer surface of the bottom portion 35 of the resin body 27b, an annular metallic member 27a is embedded, and the metallic member 27a is arranged so that the center hole 37 is positioned within a central opening 39 of the metallic member 27a. The central opening 39 of the metallic member 27a is larger in radius than the center hole 37 of the resin body 27b, and there is a given distance between an inner peripheral edge of the central opening 39 and an inner peripheral portion s1 of the center hole 37. In the bottom portion 37 of the resin body 27b, the boss portion 38 is a part of the bottom portion 35, and therefore circumferential portions s2, s3 and an inner peripheral portion s1 of the center hole 37 are all made of resin. The metallic member 27a has an exposed surface s5 between the circumferential portion s2 of the center hole and an outer circumferential portion s4 on the outer surface of the bottom portion 35.

With reference to Fig. 1 and Fig. 4 (described later), materials used for preparing the resin body 27b (67b) are not limited specifically, and the materials may be any resins conventionally used for resin hubs of optical recording media. However, preferably used are those having high strength and high moldability. Concretely, there may be used such materials as used for the aforementioned resin substrate 23a, for

example, polycarbonate, acrylic resin and polyolefin. Also employable are nylon, polyacetal, polysulfone, polyether sulfone, etc. Of these, polycarbonate is particularly preferred. As the polycarbonate, general-purpose polycarbonate (Teijin Panlite L1250, etc.) is usually employed, but high viscosity type polycarbonate (Teijin Panlite K1285, etc.) or modified type polycarbonate such as high impact resistant polycarbonate (Teijin Panlite LE1250, etc.) may also be employed. These materials for the resin body are preferably amorphous.

Materials used for preparing the metallic member (metal plate) 27a (67a) may be any metals as far as they are attracted by magnets. Particularly, ferromagnetic materials such as iron, nickel and cobalt, or alloys of the ferromagnetic materials (SUS430, SUS631, etc.) are preferably employed.

The hub 27 (67) can be easily prepared by an insert molding process in which the metallic member 27a (67a) is placed in position within a mold and a resin is then injected into the mold to prepare the resin hub body 27b (67b). Otherwise, the hub 27 (67) may be prepared by a process in which the resin hub body 27b (67b) is initially formed by molding and then the metallic member 27a (67a) is fitted on the resin hub body.

In the hub 27 (67) as mentioned above, a lubricant layer (not shown) is preferably provided on an insertion opening portion 100 of the center hole 37 (77) into which a tip of a spindle 93 is inserted, or on an extending surface 72a of the opening portion, or in the vicinity of the opening portion. However, the lubricant layer is not always provided, and it may not be formed depending on cases.

A thickness of the lubricant layer varies depending on the kind of the lubricant used, but the thickness thereof is usually in the range of 1 to 50,000 angstrom, preferably 5 to 20,000 angstrom, more preferably 100 to 15,000 angstrom. The lubricant layer is formed by coating a lubricant, for example, silicone grease.

In the invention, it is desirable to use such a lubricant that it is transparent, no-volatile or sparingly yolatile and excellent in chemical stability, though any known lubricants may be used.

Such lubricants include liquid lubricants, solid lubricants and semi-solid lubricants.

Concrete examples of the liquid lubricants include lubricants of petroleum type lubricant such as paraffinic type or naphthene type; and lubricants of other various types such as polyolefin type, polyester type, polyether type, phosphate type, fluorine type, silicone type, silicate type, alkylbenzene type and chlorinated hydrocarbon type.

Concrete examples of the solid lubricants include layered crystalline inorganic materials such as those of molybdenum disulfide type or graphite type; non-layered crystalline inorganic materials such as calcium fluoride and barium fluoride; soft metal; and organic materials such as polyimide resin and nylon.

Concrete examples of the semi-solid lubricants (so-called greases or oil compounds) include those obtained by mixing the petroleum oils or synthetic oils as base oil and metallic soaps or non-metallic soaps as viscosity increasing agent, and those further containing various additives. Examples of the non-metallic soaps include bentonite, fluorine resin and phthalocyanine type non-metallic soap.

A mixture of the above-mentioned various lubricants may be used, as is usually used.

Of those lubricants, the silicone greases or silicone oil compounds are preferably used.

Concrete examples of the silicone greases include silicone grease series G30, G31, G40, G41, G420, G501, FG720, G330, G340 and G630 (available from Shin-etsu Silicone K.K.), and silicone greases SH33, SH41, SH44, SH45 and SG3451 (available from Toray Dow Corning Silicone K.K.).

Concrete examples of the silicone oil compounds include HIVAC-G (available from Shin-etsu Silicone K.K.) and HVG (available from Toray Dow Corning Silicone K.K.).

The lubricant layer mentioned as above can be provided on the insertion opening portion 100 (100a, 100b) of the center hole 37 (77) of the hub 27 (67), into which a tip of the spindle 53(93) is inserted, or in the vicinity thereof, by the following process. For example, in an optical recording medium encased in an optical disk cartridge as shown in Fig. 18 (Fig. 19) or Fig. 32 (Fig. 33), the lubricant layer is provided by first opening an open-close shutter 513 of a cartridge case 510, then fixing it with a clip, and applying a given amount of the lubricant such as silicone grease onto the insertion opening portion 100 (100a, 100b) or in the vicinity thereof using an applicator with the lubricant on its tip.

In such a case that an excess lubricant is attached to the insertion opening portion 100, it is desired to wipe out the excess lubricant with a clean applicator. Further, when silicone grease is attached to portions other than the insertion opening portion 100 of the center hole 37 (77) of the hub or the vicinity thereof (e.g., outer surface of the hub 27 (67)), it is also desired to wipe out the silicone grease with a new applicator. The applicator once used is desirably discarded. By wiping out the excess lubricant or wiping out the lubricant attached to the undesirable portions as mentioned above, contamination of the optical recording medium can be effectively inhibited and occurrence of error in the procedure of recording and/or reproducing information can be prevented.

If the lubricant layer is formed on the insertion opening portion 100 (100a, 100b) for the spindle 53 (93) or in the vicinity thereof, sliding properties or slip properties with the spindle 53 (93) to be inserted in the

center hole 37 (77) of the hub 27 (67, 167, 267) can be improved.

The optical recording medium 21 is prepared by bonding the disk substrate body 23 and the hub 27 together by means of an adhesive layer 41. The adhesive layer 41 is formed between the opening edge circumferential portion of the central opening 25 and the flange portion 33 laid along this circumferential portion, and if necessary, between the central opening 25 of the disk substrate body 23 and the cylindrical portion 31 fitted into the central opening 25.

Examples of adhesives for forming the adhesive layer 41 include:

thermosetting adhesives such as amino resin, phenol resin, resorcinol resin, xylene resin, furan resin, epoxy resin, polyisocyanate, unsaturated polyester and acrylic resin;

thermoplastic adhesives such as vinyl acetate type, acrylic type, ethylene copolymer type, polyamide, polyester and polyurethane;

rubber type adhesives such as polychloroprene type, nitrile rubber type, reclaimed rubber type, SBR type and natural rubber type;

pressure-sensitive adhesives such as rubber type, acrylic type, emulsion type, oligomer type, hot-melt type, thermosetting type and hygroscopic setting type;

hot-melt adhesives such as water-soluble type, high-temperature type, reaction type and pressure-sensitive type;

instantaneous adhesives such as cyanoacrylic type; and

anaerobic adhesives. The disk substrate and the hub may be joined by means of ultrasonic welding or high-frequency welding. Of the above-mentioned adhesives, UV (ultraviolet) curable adhesives of the acrylic type or epoxy type are preferred.

Further, the above-exemplified adhesives can be used for bonding plural disk substrates together or plural hubs together. Particularly, the hot-melt adhesives of the water-soluble type, high-temperature type, reaction type or pressure-sensitive type are preferably used. Of these, hot-melt adhesives having a softening point of not lower than 130 °C, particularly higher than 140 °C, are preferably used.

As the hot-melt adhesives, there may be exemplified those having the following composition.

Composition

α-olefin polymer 1 - 60 % by weight

(e.g., ethylene/propylene copolymer, polypropylene and polyisobutylene)

Styrene type polymer 1 - 30 % by weight

Tackifier (viscosity imparting agent) 30 - 95 % by weight

(e.g., alicyclic resin having number-average molecular weight of 300 to 5,000)

The optical recording medium 21 is held and set on the driving device 51 by inserting the spindle 53 of the driving device 51 into the center hole 37 of the hub 27 and attracting the metallic member 27a by a magnet 55 of the driving device 51.

In the optical recording medium 21, as described above, the center hole 37 into which the spindle 53 is inserted is formed in the bottom portion 35 of the resin body 27b; the metallic member 27a is embedded on the bottom portion 35 of the resin body 27b; and the opening edge circumferential portions s2, s3 and the inner peripheral portion s1 of the center hole 37 are all made of resin. In such optical recording medium 21 as mentioned above, the spindle 53 is inserted into the center hole 37 which is defined by surrounding with resin. Therefore, the center hole is not made larger or deformed by abrasion or collision with the spindle 53 at the time when the optical recording medium 21 is subjected to loading or unloading operation. Further, any error in reading of information caused by deformation of the center hole does not occur. Accordingly, the optical recording medium 21 is optimum when used in the automatic loading and unloading operation of

the medium on and off the driving device for several hundred thousands times by virtue of an autochanger, and the medium is favorably used as an optical disk generally standardized for this driving device, for example, an optical disk having a center hole diameter of 4 mm and an outer diameter of 15 mm.

The present invention is described hereinbefore exemplifying the single plate type optical disk, but the hub for optical recording medium according to the invention can be effectively used also for a laminated type optical recording medium. The laminated type optical recording media in the preferred second and third embodiments of the invention are concretely described below referring to Figs. 4, 5, 6, 7 and 8.

Fig. 4 is an enlarged fragmentary view showing an essential part of an optical recording medium in the second embodiment of the invention which is about to be fitted on the driving device. Fig. 5 is a sectional view of the optical recording medium in the second embodiment of the invention. Fig. 6 is a sectional view of an optical recording medium in the third embodiment of the invention. Fig. 7 is a perspective view of a hub viewed from the bottom, said hub being used for the optical recording media in the second and third embodiments of the invention. Fig. 8 is a perspective view of this hub viewed from the top.

As shown in Figs. 4, 5 and 6, the optical recording medium 61 in each of the second and the third embodiments of the invention is a laminated type optical recording medium. The optical recording medium 61 comprises two disk substrate bodies 63, 63 laminated together so that recording layers 63b are positioned between the two disk substrate bodies 63, 63, and hubs 67, 67 fitted into central openings 65, 65 of the disk substrate bodies 63, 63 from both sides thereof.

The disk substrate body 63 has a resin substrate 63a and a recording layer 63b provided on an inner surface s of the resin substrate 63a. In this embodiment, each of the disk substrates 63, 63 has a recording layer 63b, but the recording layer 63b may be provided only in any one of the disk substrate bodies.

The resin substrate 63a may be formed from any known resin materials. For example, the materials exemplified in the aforementioned single plate type optical recording medium can be used for the substrate 63a.

The recording layer 63b of the disk substrate body 63 is preferably the same in materials and lamination structures as those exemplified for the recording layer 23b of the aforementioned single plate type optical recording medium.

The disk substrate bodies 63, 63 are bonded to each other by means of an adhesive, ultrasonic welding, etc. via an outer peripheral spacer 68a and an inner peripheral spacer 68b (see: Figs. 4 and 5) to form an air sandwich type, or they are directly bonded to each other with an adhesive layer 68c (see: Fig. 6). The hub 67 fitted into the central opening 65 of the disk substrate body 63 has a resin body 67b which comprises a column-like portion 71 and a flange portion 73 extended outward from one end of the column-like portion 71, as shown in Figs. 7 and 8. In the column-like portion 71 is formed a center hole 77 which penetrates through the column-like portion and opens at both end surfaces s6, s7 thereof. Into the center hole 77, a spindle 93 of a driving device 91 is inserted.

The resin body 67b has an annular groove 78 along the circumferential edge of the inward end surface s7 of the column-like portion 71, and an annular metallic member 67a is embedded on the outward end surface s6 of the column-like portion 71 including the flange portion 73. This metallic member 67a is arranged so that the center hole 77 is positioned within a central opening 89 of the metallic member. The central opening 89 of the metallic member 67a is larger in radius than the center hole 77 of the resin body 67b, and there is a given distance between an inner peripberal edge of the central opening 89 and an inner peripheral portion s8 of the center hole 77. In the column-like portion 71 of the resin body 67b, the circumferential edge portions s9, s10 and the inner peripheral portion s8 of the center hole 77 are all made of resin. The metallic member 67a has an exposed surface s12 between the circumferential edge portion s9 and the outer circumferential edge portion s11 on the outward end surface s6 of the hub 67 including the flange portion 73 and the column-like portion 71.

The resin body 67b may be formed from any resin materials conventionally used for hubs for optical recording media, without specific limitation. Concretely, the materials exemplified in the aforementioned single plate type optical disk can be used. Further, as materials for the metallic member 67a, those exemplified in the aforementioned single plate type optical disk are used.

The hub 67 is prepared in the similar manner to that for the aforementioned single plate type hub 27.

The optical recording medium 61 provided with such a hub as mentioned above is prepared by bonding the laminated disk substrate bodies 63 and the hubs 67, and bonding the hubs 67, 67 together, with an adhesive layer 83. The adhesive layer 83 is formed in a gap x between the central opening 65 of the disk substrate body 63 and the column-like portion 71 fitted into the central opening 65, in a gap y between the opening edge circumferential portion of the central opening 65 and the flange portion 73 laid along this circumferential portion, and in a gap z between the inward end surfaces s7, s7 of the hubs 67, 67. A groove 78 acts as a reservoir for the adhesive. In the invention, the groove 78 is desirably provided from the

standpoint of adhesive force, but this groove 78 is not essential and, depending on circumstances the groove 78 is omissible. Further, in the invention, the adhesive layer 83 is desirably formed in the three gaps of x, y and z from the standpoint of adhesion strength. However, the adhesive layer 83 may be formed only in the gap y, or may be formed in the gaps x and y or y and z.

The optical recording medium 61 is held and set on a driving device 91 by inserting a spindle 93 of the driving device 91 into the center hole 77 of the hub 67 and attracting the metallic member 67a by a magnet 95 of the driving device 91. In this optical recording medium 61, it is preferred to provide the aforementioned lubricant layer on a spindle insertion opening portion 100 of the hub.

As described above, in the optical recording medium 61, the center hole 77 into which the spindle 93 is inserted is formed in the column-like portion 71 of the resin body 67b; the metallic member 27a is embedded in the column-like portion 71; and the opening edge circumferential portions s9, s10 and the inner peripheral portion s8 of the center hole 77 are all made of resin. In this optical recording medium 61, the spindle 93 is inserted into the center hole 77 which is defined by surrounding with resin. Therefore, the center hole 77 is not made larger or deformed by abrasion and collision with the spindle 93 at the time when the optical recording medium 61 is subjected to loading and unloading operation. Further, any error in reading of information caused by deformation of the center hole does not occur. Accordingly, the optical recording medium 61 is optimum when used in the loading and unloading operation of the medium on and off the driving device for several hundred thousands times by virtue of an autochanger.

The hub for optical recording medium and the optical recording medium according to the invention are described hereinbefore exemplifying the first to third embodiments, but it should be construed that they are in no way limited to those embodiments, and it is enough that the hub is a composite type hub comprising a metallic member and a resin member wherein the inner peripheral portion and the opening edge portion of the center hole for insertion of a spindle are made of resin. Accordingly, the hub for optical recording medium and the optical recording medium according to the invention may have such a structure that a center hole is formed in the metallic member and the center hole is covered with a resin, as shown in Figs. 9 and 10.

Fig. 9 is a sectional view of an optical recording medium in the preferred fourth embodiment of the invention. Fig. 10 is a perspective view of a hub for the optical recording medium in the fourth embodiment of the invention. As shown in these figures, a hub 105 fitted with a central opening 109 of a disk substrate body 103 having an (information) recording layer 101 is a composite type hub provided with a metallic member 105a having a center hole 113. The hub 105 has a resin body 105b having a cylindrical portion 107 and a flange portion 108 formed at one end of the cylindrical portion 107. The metallic member 105a is an annular plate, and has ribs 118, 119 existing along the circumferential portion of a center hole 113 and the outer circumferential portion of the metallic member, respectively. The outer circumferential portion of the metallic member is embedded on the other end of the resin body 105b to fix the metallic member to the resin body. Further, a cylindrical resin body 115 with a flange 114 is provided along the inner peripheral portion of the center hole 113 for insertion of a spindle of an optical disk driving device, and the flange 114 covers the opening edge portion of the center hole 113. This cylindrical resin body 115 may be a thin film to cover the inner peripheral portion of the central opening 113, or may be a thick cylindrical resin body fitted into the center hole 113. In Fig. 9, a layer 111 is an adhesive layer.

Also in such an optical recording medium as mentioned above, the spindle of an optical disk driving device is inserted into the cylindrical resin body 115 covering the inner peripheral portion and the opening edge portion of the center hole 113, so that the center hole 113 is free from enlargement or deformation by abrasion or collision with the spindle during the loading and unloading operation of the optical recording medium.

Next, the hub for the optical recording medium in the preferred fifth embodiment of the invention is described. It is desired that hubs used for the optical recording media in the fifth to seventeenth embodiments, and materials of each members, processes for preparing each members, etc. of the fifth to seventeenth embodiments are the same as those of the aforementioned first to fourth embodiments, unless stated otherwise.

Fig. 20 is to show sectional views of insertion opening portions of hubs for the optical recording medium in the fifth embodiment of the invention. Fig. 20 (a) shows a case where an external angle between an extending surface of the insertion opening portion and an upper surface of the hub is 45°; Fig. 20 (b) shows a case where the external angle is 56°; and Fig. 20 (c) shows a case where the external angle is 63°.

Fig. 13 is a perspective view of a hub viewed from the bottom, said hub being for the optical recording medium in the fifth embodiment of the invention shown in Fig. 11. Fig. 14 is a perspective view of this hub viewed from the top.

The optical recording medium provided with such a hub 167 as mentioned above according to the invention is shown in Fig. 11, Fig. 12, Figs. 15 to 19, and Figs. 21 to 24. In these figures, the external angle between an extending surface of an insertion opening portion of the hub and an upper surface of the hub is 56° as shown in Fig. 20 (b), but the external angle may be 45° or 63° as shown in Fig. 20 (a) or 20 (c). Further, a difference q (width of chamfered portion) between a radius w of the opening end 72 of the insertion opening portion 100a and a radius p of the center hole 77 may be 0.2 mm as shown in those figures, or may be other value in the range of 0.02 to 0.2 mm as described later.

Figs. 11 and 12 are sectional views of the optical recording media in the fifth and sixth embodiments of the invention.

Fig. 11 exhibits a laminated type optical recording medium in which a concave portion 81 to be engaged with the annular metallic member 67a is provided on the outward end surface s6 of the hub shown in Fig. 13, and Fig. 12 exhibits an air-sandwich type optical recording medium in which the same concave portion 81 as that in Fig. 11 is provided on the outward end surface of the hub.

Fig. 15 is an enlarged fragmentary view showing an essential part of the optical recording medium in the fifth embodiment of the invention which is about to be fitted on the driving device.

Fig. 16 is a sectional view of the optical recording medium in the seventh embodiment of the invention, said optical recording medium being a laminated type optical recording medium in which such a concave portion 81 as shown in the optical recording medium of Fig. 11 for engaging the annular metallic member 67a with the outward end surface s6 of the hub is not provided. Fig. 17 exhibits an air-sandwich type optical recording medium in which such a concave portion 81 as shown in the optical recording medium of Fig. 12 is not provided on the outward end surface of the hub.

As shown in Fig. 20, each of the hubs for the optical recording media in the fifth to eighth embodiments of the invention has a center hole 77 into which a spindle 93 of a disk driving device is inserted. In the hub 167 capable of being attracted by a clamping magnet provided on a turn table of the disk driving device, the insertion opening portion 100a of the center hole 77 of the hub 167 extends straight in the direction of the opening end 72. The insertion opening portion 100a of the hub is described below in detail referring to Fig. 20.

In the invention, an external angle ($\theta_2$) between the extending surface 72a of the insertion opening portion 100a and the upper surface 72b of the hub is desirably determined so that the sum ($\theta_1 + \theta_2$) of a half angle ($\theta_1$) of the vertical angle of the spindle 93 and the external angle ($\theta_2$) would be more than 90°, preferably more than 100°.

By the way, the spindle is formed as a stich having a tapered tip as shown in Fig. 20 (a), and the vertical angle ($2\theta_1$) of the spindle 93 is at most 160°, usually in the range of about 90° to 120°.

Accordingly, the above-mentioned external angle ($\theta_2$) is in the range of 10 to 80°, preferably 30 to 80°, more preferably 50 to 80°. Fig 20 (a) shows a case where the external angle ($\theta_2$) is 45°; Fig. 20 (b) shows a case where the external angle ($\theta_2$) is 56°; and Fig. 20 (c) shows a case where the external angle ($\theta_2$) is 63°.

When the angle ($\theta_1 + \theta_2$) is set within the above range, the center hole s8 and the circumference thereof are hardly deformed even if the spindle 93 is repeatedly brought into contact (collides) with the insertion opening portion 100.

Therefore, such troubles that the spindle 93 is not fitted into the center hole s8 and that the spindle 93 once fitted into the center hole s8 is not detached from the center hole rarely or never take place, even when the recording medium provided with the hub of the invention is repeatedly loaded on and unloaded from the driving device.

Accordingly, even when such an optical recording medium provided with the hub as described later is repeatedly subjected to loading and unloading operation on and off the driving device, the center hole s8 is free from deformation caused by collision of the spindle 93 with the circumference of the insertion opening portion, and excellent loading properties can be maintained.

In the invention, a difference q (width of chamfered portion) between a radius w of the opening end 72 of the insertion opening portion 100a and a radius p of the center hole 77 is in the range of 0.02 mm to 2.0 mm, preferably 0.1 mm to 0.5 mm, more preferably 0.2 mm to 0.4 mm.

The width of the chamfered portion is preferably large because the spindle can be easily inserted into the center hole and deformation of the center hole or the circumference thereof can be reliably prevented. Therefore, q is preferably not less than 0.02 mm in the invention.

In the case where the external angle ($\theta_2$) between the extending surface 72a of the insertion opening portion 100a and the upper surface 72b of the hub is set within the above-mentioned range, the depth of the insertion opening portion 100a becomes large. For fixing the optical recording medium with high central accuracy by means of a spindle 93, the spindle 93 is required to be inserted more deeply than the depth of

the insertion opening portion.

For this reason, if the width of the chamfered portion is large, a long spindle is necessary, but a long spindle is unsuitable for practical use. In the invention, therefore, q is preferably not more than 2.0 mm.

The above-mentioned hub 167 of the invention in which the insertion opening portion 100a extends straight in the direction of the opening end 72 is fitted into a central opening 65 of such a disk substrate body 63 as described later (see: Fig. 11). The hub 167 generally has a resin body 67b comprising a column-like portion 71 and a flange portion 73 extended outward from one end of the column-like portion 71, as shown Figs. 13 and 14.

In the column-like portion 71 is formed a center hole 77 which penetrates through the column-like portion 71 and opens at both end surfaces s6, s7 of the column-like portion 71. Into the center hole 77, such a spindle 93 of a driving device 91 as shown in Fig. 15 (described later) is inserted.

In the hub for optical recording medium according to the invention, as shown in Fig. 13 or Fig. 14, the resin body 67b constituting a part of the hub 167 has an annular groove 78 along the circumferential edge of the inward end surface s7 of the column-like portion 71, and an annular metallic member (metal plate) 67a is embedded on the outward end surface s6 of the column-like portion 71 including the flange portion 73 (see: Fig. 14). This metallic member 67a is arranged so that the center hole 77 is positioned within a central opening 89 of the metallic member.

The central opening 89 of the metallic member 67a is larger in radius than the center hole 77 of the resin body 67b, and the inner edge of the central opening 89 is apart from the inner peripheral portion s8 of the center hole 77 with a given distance.

Accordingly, in the column-like portion 71 of the resin body 67b, the circumferential portions s9, s10 and the inner peripheral portion s8 of the center hole 77 are all made of resin. The metallic member 67a has an exposed surface s12 between the circumferential portion s9 of the center hole and the outer circumferential portion s11 on the outward end surface s6 of the hub 167 including the flange portion 73 and the column-like portion 71.

As materials for the resin body 67b, there can be used those for the resin body 27b of the aforementioned optical recording medium in the first embodiment of the invention.

Further, as materials for the metallic member (metal plate) 67a, those for the aforementioned metallic member 27a can be employed.

In the invention, a metallic member having the exposed surface s12 may be used for the hub 167 as mentioned above. However, the hub 167 may be entirely made up of a magnetic metal in the form of thin ring as shown in Fig. 21 (a), or may have a structure comprising a cylindrical portion 767 extending toward the inside of the center hole 77 and a flange portion 73 and being entirely made up of a magnetic metal as shown in Fig. 21 (b).

Further, as shown in Fig. 22 (a), a metallic member 701 capable of being attracted by a magnet member provided on a turn table of a disk driving device may have a center hole 651 into which a spindle is inserted. Furthermore, as shown in Fig. 22 (b), it is possible that a metallic member 701 capable of being attracted by a magnet member provided on a turn table of a disk driving device has a center hole 651 into which a spindle is inserted and is provided with a cylindrical projected portion toward the inside of the center hole 651.

The outer circumferential edge 702 of each of the metallic members 701 is preferably embedded in the resin body 67b to fasten the metallic member to the resin body 67b.

The hub 167 is prepared in the same manner as that for the aforementioned hub 27 or 67.

The hub 167 provided with the concave portion 81 on the outward end surface s6 shown in Fig. 11 or Fig. 12 may be prepared by initially molding a resin hub body 67b having 1 or 2 or more concave portions 81 provided at about equal interval in the vicinity of the circumference of the outward end surface s6 and then fitting the metallic member 67a having 1 or 2 or more engaging members 82 into the concave portions 81 of the resin hub body 67b.

The optical recording medium 61 shown in Fig. 11 is prepared for example in the same manner as that for the aforementioned recording medium in the second or third embodiment of the invention.

In the above-mentioned hub 167, such a lubricant layer (not shown) as mentioned before is preferably formed on the extending surface 72a of the insertion opening portion 100a of the center hole 77 into which a tip 521a (93c) of the spindle 93 is inserted or in the vicinity thereof, from the viewpoint of sliding properties. However, the lubricant layer is not essential, and depending on cases the lubricant layer may be omissible.

When the lubricant layer is formed on the insertion opening portion 100a for the spindle 93 or in the vicinity thereof, sliding properties or slip properties between the spindle 93 and the center hole 77 of the hub 167 can be improved.

One example of the optical recording medium provided with the hub 167 is described below referring to Fig. 11. Fig. 11 shows a laminated type optical recording medium which is the fifth embodiment of the invention.

The optical recording medium 61 of the invention is such a laminated type optical recording medium as shown in Fig. 11. The optical recording medium 61 comprises two disk substrate bodies 63, 63 laminated together in such a manner that recording layers 63b are positioned between the two disk substrate bodies 63, and is provided with hubs 167, 167 fitted into central openings 65, 65 of the disk substrate bodies from both sides thereof.

For example, in the optical recording medium shown in Fig. 11 or Fig. 12, a metallic member 67a is embedded in a column-like portion 71 constituting the hub 167, and other portions of the column-like portion (that is, opening edge circumferential portions s9, s11 and inner peripheral portion s8 of the center hole 77) are formed from resin as shown in Fig. 14. In the optical recording medium 61, the spindle 93 is inserted into the center hole provided with a lubricant layer on the surface of the opening edge portion 89 and having excellent slip properties, so that the loading and unloading operation of the recording medium can be carried out smoothly and no poor loading performance occurs. (In Fig. 11, the lubricant layer is not necessarily provided.)

Accordingly, this optical recording medium 61 is optimum when used in the automatic loading and unloading operation on and off the disk drive (driving device) for several ten thousands to several hundred thousands times by means of an automatic loading and unloading machine (autochanger).

The disk substrate body 63 has a resin substrate 63a made of the same material as that for the aforementioned resin substrate 23a and a recording layer 63b (being the same as the aforementioned recording layer 23b) provided on an inner surface s of the resin substrate 63a. In this embodiment, each of the disk substrate bodies 63, 63 has a recording layer 63b, but the recording layer 63b may be provided on any one of the disk substrate bodies.

The resin substrate 63a is formed from the same material as that for the aforementioned resin substrate 23a.

The disk substrate bodies 63, 63 are directly bonded to each other with an adhesive layer 68c as shown in Fig. 11 (or Fig. 16), or bonded to each other by means of the same adhesive as mentioned before, ultrasonic welding, etc. through an outer peripheral spacer 68a and an inner peripheral spacer 68b to form an air sandwich type as shown in Fig. 12 (or Fig. 17).

The optical recording medium 61 of the invention is used by holding and setting the medium on such a driving device 91 as shown in Fig. 15.

Fig. 18 is to show sectional views of the optical recording medium 61 of the invention, a disk cartridge and a disk drive, and Fig. 19 is a front view of the disk cartridge shown in Fig. 18. The optical recording medium 61 of the invention can be used as an optical disk cartridge by encasing and rotatably holding the medium within a cartridge case 510 of thin hollow box shape, as shown for example in Fig. 18 or Fig. 19.

The cartridge case 510 for encasing the optical recording medium is prepared, for example, by laminating together a pair of case forming members 510a, 510b made of synthetic resin to form a hollow portion 511. In this cartridge case 510, an open window 512 through which a part of the substrate of the optical recording medium is exposed externally is provided on both sides of the cartridge case 510. Further, the cartridge case 510 is provided with an open-close shutter 513 for opening or closing the open window 512, said shutter 513 being reciprocative slidable in the direction of an arrow shown in Fig. 9

Furthermore, in the cartridge case 510, an opening 514 is formed through which a turn table 96 of the disk driving device is inserted, and along the circumference of this opening 514 an inner circumferential rib 515 is formed on the inner surface of the cartridge case 510, said surface being opposite to the optical recording medium. The inner circumferential rib 515 is intended to inhibit "looseness" of the optical recording medium by relatively narrowing the space between the inner circumferential rib 515 and the optical recording medium.

The optical recording medium encased in the disk cartridge 510 is fitted to the optical disk driving device and rotated. The optical disk driving device has the turn table 96 as mentioned before. The turn table 96 has an annular holding portion 523 formed so as to embrace the hub 67 and a spindle 93 projecting from the center of the turn table, tapering off to its tip portion 521a and going to be inserted into the center hole 77 of the hub 167.

Further, the turn table 96 is provided with a magnet 524 for attracting the metal plate s12 of the hub 167 in a state where the hub 167 is held in the annular holding portion 523 and the spindle 93 (53) is inserted into the center hole 77. Owing to the magnet and the annular holding portion, the hub 167 is fixed on the turn table 96. When the turn table 96 is set to be rotated, the optical recording medium rotates and the disk substrate 63 exposed through the open window 512 is irradiated with a laser beam, whereby information is

recorded on or reproduced from the optical recording medium.

The present inventor conducted 20,000 times an experiment (load/unload test) to load the optical recording medium (optical disk) having a size of 5.25 inches on an upright drive (SMO-S501, upright type, produced by Sony Corporation), whereupon no trouble occurred. The upright drive referred to above has a disk cartridge loading aperture formed perpendicular to the ground, and the disk cartridge is inserted longitudinally into the loading aperture. In the "upright loading test", Sony Drive SMO-S501 (produced by Sony Corporation) was used as a driving device. For the load/unload test, three kinds of hubs for optical disk as shown in Figs. 20 (a), 20 (b) and 20 (c) were used. In each of the hubs for optical disk, a magnetic plate is fitted to a polycarbonate hub body, and a width (q) of the chamfered portion (tapered portion) is 0.2 mm. The three kinds of the hubs are different from each other only in the external angle ($\theta_2$) between the extending surface 72a of the spindle insertion opening portion 100a and the upper surface 72b of the hub, and they have the external angles of 45° (Fig. 20 (a)), 56° (Fig. 20 (b)) and 63° (Fig. 20 (c)), respectively.

In the above experiment, the load/unload test was carried out automatically using a robot (RV-CMI, produced by Mitsubishi Electric Corporation)

The load/unload test referred to above is intended to mean a repetition of such loading operation as described below, and a robot was used in this test. The inner diameter (2p) of the hub was evaluated by means of a pin gauge.

That is, the robot is allowed to insert into the upright drive the optical recording medium which is completely taken off from the drive. The optical recording medium thus inserted is fitted automatically to the drive. The upright drive is then set to initiate spin-up of the fitted optical recording medium, whereby the upright drive is brought to "READY STATE" wherein the recording and reproducing operation becomes possible, and "BUSY LAMP" provided in the upright drive (a lamp for indicating a quick increase of rotation of the optical recording medium) goes off. After the lamp goes off, the robot is allowed to press "EJECT BUTTON" for instructing to take out the optical recording medium therefrom, whereupon the optical recording medium is ejected from the device to appear partly. The robot is then allowed to draw out completely the partly appeared optical recording medium from the device, whereby the test terminates one time. By "load/unload test" is meant that such a test as mentioned above is carried out repeatedly. The drive was set to sound the alarm when the drive is not brought to the "READY STATE" 15 seconds after the optical recording medium was inserted into the drive. The tact time for the test of one time was 22 seconds.

Such a load/unload test as mentioned above was conducted 20,000 times, whereupon no trouble such as poor loading performance occurred at all. Further, no trouble was observed in the hub portion when the hub portion was inspected visually in the middle of the load/unload test.

The optical recording medium of the invention provided at predetermined portions with a lubricant layer made of silicone grease (also referred to as a silicone grease layer) was subjected to the load/unload test, and as a result, any trouble such as poor loading performance never occurred. The hub portion was visually inspected in the middle of the load/unload test in the same way as above, whereupon no trouble was observed.

It is needless to say that the invention is in no way limited to the examples mentioned above and it will be understood that variations and modifications are possible.

The above-described optical recording media and hubs for optical recording media in the fifth to eighth embodiments are those of "laminated type" (see: Figs. 11 and 12). Next, an optical recording medium of "single plate type" in the thirteenth embodiment of the invention and a single plate type hub for optical recording medium are illustrated.

The optical recording medium 21 (61) shown in Fig. 23 (Fig. 24) is a single plate type optical recording medium, and has a disk substrate body 23a and a hub 27 which is fitted into a central opening 25 of the disk substrate body 23a.

The disk substrate body 23a, a recording layer, etc. are the same as those in the aforementioned laminated type optical recording medium.

Into the central opening 25 of the disk substrate body 23a is fitted the hub 27. Similarly to the hub 67 in the optical recording medium shown in Fig. 11, the hub 27 has a resin body 27b which having a cylindrical portion 31, a flange portion 33 extended outward from one end of the cylindrical portion 31 and a bottom portion 35 blockading the other end of the cylindrical portion. In the bottom portion 35 is formed a center hole 37 into which a spindle of a driving device is inserted, and the periphery of the center hole 37 forms a cylindrical boss 38.

On the outer surface of the bottom portion 35 of the resin body 27b is embedded an annular metallic member 27a, and this metallic member 27a is arranged so that the center hole 37 is positioned within a central opening 39 of the metallic member. The central opening 39 of the metallic member 27a is larger in

radius than the center hole 37 of the resin body 27b, and the inner edge of the opening 39 is apart from the inner peripheral portion s1 with a given distance. In the bottom portion 35 of the resin body 27b, the boss 38 is a part of the bottom portion 35, and therefore circumferential portions s2, s3 and the inner peripheral portion s1 of the center hole 37 are all made of resin. The metallic member 27a has an exposed portion s5 between the center hole circumferential portion s2 and an outer circumferential portion s4 of the outer surface of the bottom portion 35.

Materials used for the resin body 27b and the metallic member 27a are the same as those mentioned before.

The hub 27, the optical recording medium 21, etc. are prepared in the same manner as described before.

In the single plate type optical recording medium 21, a spindle insertion opening portion 100a of the center hole is chamfered and extends straight in the direction of the opening end in the same manner as in the insertion opening portion 100a of the aforementioned laminated type optical recording medium 61 shown in Fig. 11. On the insertion opening portion 100a thus chamfered is desirably formed the same lubricant layer (not shown) as mentioned before.

Next, the optical recording medium in the fourteenth embodiment of the invention and the hub for the same are concretely illustrated hereinafter referring to the attached drawings.

First, the hub for optical recording medium in the fourteenth embodiment of the invention is described below.

Fig. 33 is to show sectional views of insertion opening portions of the hubs for optical recording media according to the invention. Fig. 33 (A) is a sectional view of an insertion opening portion of the hub, said insertion opening portion having a curvature radius (R) of 0.3 mm; and Fig. 33 (B) is a sectional view of an insertion opening portion of the hub, said insertion opening portion having a curvature radius (R) of 0.5 mm.

Fig. 27 is a perspective view of a hub viewed from the bottom, said hub being used for the optical recording medium in the fourteenth embodiment of the invention. Fig. 28 is a perspective view of this hub viewed from the top.

The optical recording medium of the invention provided with such a hub 267 as mentioned above is shown in Fig. 25, Fig. 26, Figs. 29 to 32, and Figs. 34 to 37. In these figures, the insertion opening portion of the hub sectionally extends from the center hole 77 toward the opening end 72 in the form of an arc with a curvature radius (R) of 0.5 mm, in the same manner as in the case shown in Fig. 33 (B). However, the curvature radius (R) may be 0.3 mm as shown in Fig. 33 (A), or may be other value within the range of more than 0.2 mm to not more than 2.0 mm as described later.

Figs. 25 and 26 are sectional views of the optical recording media in the fourteenth embodiment and the fifteenth embodiment of the invention, respectively.

Fig. 25 exhibits a laminated type optical recording medium in which a concave portion 81 to be engaged with an annular metallic member 67a is provided on the outward end surface s6 of the hub shown in Fig. 28, and Fig. 26 exhibits an air-sandwich type optical recording medium in which the same concave portion 81 as that of the optical recording medium shown in Fig. 25 is provided on the outward end surface of the hub.

Fig. 29 is an enlarged view showing an essential part of the optical recording medium in the fourteenth embodiment of the invention, which is about to be fitted on the same optical disk driving device as mentioned before.

Fig. 30 is a sectional view of the optical recording medium in the sixteenth embodiment of the invention, said optical recording medium being a laminated type optical recording medium which has no such a concave portion as in the optical recording medium of Fig. 25 provided for fitting an annular metallic member 67a to the outward end surface s6 of the hub. Fig. 31 is a sectional view of an air-sandwich type optical recording medium (seventeenth embodiment) which has no such a concave portion 81 as in the optical recording medium of Fig. 26.

As shown in Fig. 33, the hub 267 for the optical recording medium according to the invention (see: Figs. 25 to 32) has a center hole 77 into which a spindle 93 of a disk driving device is inserted. In the hub 267 capable of being attracted by a clamp magnet provided on a turn table of the disk driving device, an insertion opening portion 100b of the center hole 77 sectionally extends in the form of an arc with a curvature radius (R) of more than 0.2 mm but not more than 2.0 mm, preferably in the range of 0.3 mm to 0.5 mm, in the direction of the opening end 72. In the case where the insertion opening portion 100b extends in the form of an arc with such a curvature radius as mentioned above, the center hole s8 and the circumference thereof are hardly deformed even if the spindle 93 is repeatedly brought into contact (collides) with the insertion opening portion 100b. Therefore, such troubles that the spindle 93 is not fitted into the center hole s8 and that the spindle once fitted into the center hole s8 is not detached from the

center hole rarely or never take place, even when the recording medium provided with the hub is repeatedly loaded on and unloaded from the driving device. Accordingly, even when the optical recording medium provided with the hub is repeatedly subjected to the loading and unloading operation on and off the driving device, excellent loading properties can be maintained.

The insertion opening portion 100b of the hub 267 according to the invention is now illustrated in detail referring to Fig. 33.

The spindle is in the form of a stick having a tapered tip as shown in Fig. 33 (A), and the vertical angle ($2\theta_1$) of the spindle 93 is at most 160°, usually in the range of about 90° to 120°. In the hub 267 of the invention shown in each of Figs. 33 (A) and 33 (B), the position of the spindle 93 and the position of the opening end 72 of the insertion opening portion 100b at the time of insertion of the spindle 93 get a distance longer than that in the case of using a conventional hub 802 shown in Fig. 40 or Fig. 41, so that the center hole s8 and the circumference thereof are hardly deformed even if the spindle 93 is repeatedly brought into contact (collides) with the insertion opening portion 100b.

In other words, the width of the chamfered portion is preferably large, because the spindle can be easily inserted into the center hole and deformation of the center hole or the circumference thereof can be reliably prevented. Therefore, the curvature radius (R) is preferably more than 0.2 mm, more preferably not less than 0.3 mm, in the invention.

In the case where the curvature radius (R) is set within the above range, the depth of the insertion opening portion 100b becomes large. For fixing the optical recording medium with high central accuracy by means of the spindle 93, the spindle 93 is required to be inserted more deeply than the depth of the insertion opening portion.

For this reason, if the curvature radius (R) is large, a long spindle is necessary, but a too long spindle is unsuitable for practical use. In the invention, therefore, the curvature radius (R) is preferably not more than 2.0 mm, more preferably not more than 0.5 mm.

In the case of using the hub 267 of the invention, such troubles that the spindle 93 is not fitted into the center hole s8 and that the spindle once fitted into the center hole s8 is not detached from the center hole rarely or never take place, even when the recording medium provided with the hub is repeatedly loaded on and unloaded from the driving device.

Accordingly, even when such an optical recording medium provided with the hub 267 as described later is repeatedly subjected to the loading and unloading operation on and off the driving device, the center hole s8 is free from deformation caused by collision of the spindle 93 with the circumference of the insertion opening portion, and excellent loading properties can be maintained.

The hub 267 of the invention is fitted into a central opening 65 of such a disk substrate body 63 as described later (see: Fig. 25). The hub 267 generally has a resin body 67b comprising a column-like portion 71 and a flange portion 73 extended outward from one end of the column-like portion 71, as shown Figs. 27 and 28.

In the column-like portion 71 is formed a center hole 77 which penetrates the column-like portion 71 up to both end surfaces s6, s7 of the column-like portion. Into the center hole 77, such a spindle 93 of a driving device 91 as shown in Fig. 29 (described later) is inserted.

In the hub 267 for optical recording medium according to the invention, as shown in Fig. 27 or Fig. 28, the resin body 67b constituting a part of the hub 267 has an annular groove 78 along the circumferential edge of the inward end surface s7 of the column-like portion 71, and an annular metallic member (metal plate) 67a is embedded on the outward end surface s6 of the column-like portion 71 including the flange portion 73 (see: Fig. 28). This metallic member 67a is arranged so that the center hole 77 is positioned within the central opening 89 of the metallic member.

The central opening 89 of the metallic member 67a is larger in radius than the center hole 77 of the resin body 67b, and the inner edge end of the central opening 89 is apart from the inner peripheral portion s8 of the center hole 77 with a given distance.

Accordingly, in the column-like portion 71 of the resin body 67b, the circumferential portions s9, s10 and the inner peripheral portion s8 of the center hole 77 are all made of resin. The metallic member 67a has an exposed surface s12 between the circumferential portion s9 of the center hole and the outer circumferential portion s11 of the metallic member on the outward end surface s6 of the hub 67 including the flange portion 73 and the column-like portion 71.

As materials for the resin body 67b, there can be used those for the resin body 27b of the aforementioned first embodiment of the optical recording medium according to the invention.

Further, as materials for the metallic member (metal plate) 67a, those for the aforementioned metallic member 27a can be employed.

In the invention, a metallic member having the exposed surface s12 may be used for the hub 267 as mentioned above. However, the hub 267 may be entirely made up of a magnetic metal in the form of thin ring as shown in Fig. 34 (a), or may have a structure comprising a cylindrical portion 767 extending toward the inside of the center hole 77 and a flange portion 73 and being entirely made up of a magnetic metal as shown in Fig. 34 (b).

Further, as shown in Fig. 35 (a), a metallic member 701 capable of being attracted by a magnet member provided on a turn table of a disk driving device may have a center hole 651 into which a spindle is inserted. Furthermore, as shown in Fig. 35 (b), it is possible that a metallic member 701 capable of being attracted by a magnet member provided on a turn table of a disk driving device has a center hole 651 into which a spindle is inserted and is provided with a cylindrical projected portion toward the inside of the center hole 651.

The outer circumferential edge 702 of each of the metallic member 701 is preferably embedded in the resin body 67b to fasten the metallic member to the resin body 67b.

The hub 267 is prepared in the same manner as that for the aforementioned hub 67 or 167.

The optical recording medium 61 provided with the above hub, which is shown in Fig. 25, is prepared in the same manner as that for the recording media in the aforementioned second and third embodiments.

In the hub 267, a lubricant layer (not shown) is preferably formed on the extending surface 72a of the insertion opening portion 100b of the center hole 77 into which a tip 521a (93c) of the spindle 93 is inserted or in the vicinity thereof, similarly to the case of the aforementioned hub 167, from the viewpoint of sliding properties.

A thickness of the lubricant layer, a process for preparing the lubricant layer, kind of a lubricant used for preparing the lubricant layer, etc. are the same as those described before with respect to the hubs 27, 67 and 167.

If the lubricant layer is formed on the insertion opening portion 100a for the spindle 93 or in the vicinity thereof, sliding properties or slip properties between the spindle 93 and the center hole 77 of the hub 167 can be improved.

One example of the optical recording medium provided with the above hub 267 which is the fourteenth embodiment of the invention is illustrated below referring to Fig. 25. Fig. 25 shows a laminated type optical recording medium.

This optical recording medium 61 differs from the optical recording medium 61 shown in Fig. 11 only in the shape of the insertion opening portion of the hub, and is the laminated type optical recording medium as shown for example in Fig. 25. The optical recording medium 61 shown in Fig. 25 comprises two disk substrate bodies 63, 63 laminated together so that recording layers 63b are positioned between these disk substrate bodies 63, 63, and hubs 67, 67 fitted into central openings 65, 65 of the disk substrate bodies from both sides.

For example, in the optical recording medium shown in Fig. 25 or Fig. 26, a metallic member 67a is embedded in a column-like portion 71 constituting the hub 267 and other portions of the column-like portion 71 (i.e., opening edge circumferential portions s9, s11 and inner peripheral portion s8 of the center hole 77) are formed from resin, as shown in Fig. 28. In the optical recording medium 61, a spindle 93 is inserted into the center hole provided with a lubricant layer on the surface of the opening portion 89 and having excellent slip properties. Therefore, the loading and unloading operation of the optical recording medium 61 can be carried out smoothly and no poor loading performance occurs. In Fig. 25, the lubricant layer is not necessarily provided.

The disk substrate body 63 has a resin substrate 63a made of the same material as that for the aforementioned resin substrate 23a and a recording layer 63b (the same as the aforementioned recording layer 23b) provided on an inner surface s of the resin substrate 63a. The resin substrate 63a is formed from the same material as that for the aforementioned resin substrate 23a.

The optical recording medium 61 is used in the same way as that for the aforesaid optical recording media.

Fig. 32 is to show sectional views of the optical recording medium 61 of the invention, a disk cartridge and a disk drive. The optical recording medium 61 of the invention may be used as an optical disk cartridge in which the recording medium is encased and rotatably held within a cartridge case 510 of thin hollow box shape, as shown for example in Fig. 32 or Fig. 19.

Information is recorded on or reproduced from the optical recording medium encased in the disk cartridge 510 in the same way as described before.

The present inventor conducted 20,000 times an experiment (load/unload test) to load the optical recording medium (optical disk) shown in Figs. 25 to 32 having a size of 5.25 inches on an upright drive (SMO-S501, upright type, produced by Sony Corporation), whereupon no trouble occurred. For the

load/unload test, two kinds of hubs for optical disk shown in Figs. 33 (A) and 33 (B) were used. In each of the hubs, a magnetic plate is fitted to a polycarbonate hub body. The two kinds of the hubs have a curvature radius (R) of 0.3 mm (Fig. 33 (A)) and a curvature radius (R) of 0.5 mm (Fig. 33 (B)), respectively. A curvature radius of a hub used for comparison is 0.2 mm (Figs. 40 and 41).

In conducting the above experiment, the load/unload test was carried out automatically using the same robot as described before.

Such a load/unload test as mentioned above was conducted 20,000 times, whereupon no trouble such as poor loading performance occurred at all with respect to the hubs (A) and (B) of the invention. Further, the hub portion was visually inspected in the middle of the load/unload test in the same way as above, whereupon no trouble was observed.

The optical recording medium of the invention provided at the predetermined portions with the lubricant layer of silicone grease (also referred to as a silicone grease layer) was subjected to the load/unload test, whereupon any trouble such as poor loading performance never occurred. Further, the hub portion was visually inspected in the middle of the load/unload test in the same way as above, whereupon no trouble was observed.

It is needless to say that the invention is in no way limited to the examples mentioned above and it will be understood that variations and modifications are possible.

The optical recording media in the fourteenth to seventeenth embodiments and the hubs for the same described above are those of "laminated type" using the above-mentioned R type hub (see: Figs. 25 and 26). Next, an optical recording medium of "single plate type" provided with the R type hub and the hub for the single plate type optical recording medium are illustrated.

The optical recording medium 21 shown in Fig. 36 is a single plate type optical recording medium which differs from the optical recording medium 21 shown in Fig. 1 or Fig. 23 only in the shape of the insertion opening portion of the hub, and the medium has a disk substrate body 23a and a hub 27 fitted into a central opening 25 of the disk substrate body 23a.

The disk substrate body 23a, a recording layer, a metallic member 27a, a resin body 27b, etc. are the same as those in the aforementioned optical recording medium shown in Fig. 1 or Fig. 23.

The hub 27, the optical recording medium 21, etc. are prepared in the same manner as described before.

In the single plate type optical recording medium 21, a spindle insertion opening portion 100b of the center hole is chamfered and extends in the form of an arc in the direction of the opening end in the same manner as described with respect to the insertion opening portion 100b of the laminated type optical recording medium 61 shown in Fig. 25. On the chamfered (i.e., extended in the form of an arc) opening portion 100b is desirably formed the same lubricant layer (not shown) as mentioned before.

## EFFECT OF THE INVENTION

In the hub for optical recording medium and the optical recording medium according to the invention, the hub comprises a metallic member and a resin member. The metallic member can be attracted by a magnet provided on an optical disk driving device; the resin member has a center hole into which a spindle of the driving device is inserted; and an inner peripheral portion and an opening edge circumferential portion of the center hole are all made of resin. Therefore, any friction or any collision between the spindle and the center hole never takes place during the loading and unloading operation of the disk substrate, and hence the center hole is free from enlargement and deformation. Accordingly, any error in reading of information caused by deformation of the center hole of the hub does not occur, so that the present invention can be favorably used in the automatic loading and unloading operation of the recording medium on and off the driving device for several hundred thousands times by means of an autochanger.

In the case of using the hub for optical recording medium and the optical recording medium according to the invention wherein the insertion opening portion of the hub is chamfered and sectionally extends straight or in the form of an arc toward the opening end, such a trouble that the optical recording medium is not fitted with a spindle or that the optical recording medium is not detached from the spindle rarely or never takes place, even when the recording medium is repeatedly loaded on or unloaded from the driving device.

## Claims

1. A hub for optical recording medium comprising a metallic member capable of being attracted by a magnet of an optical disk driving device and a resin member having a center hole into which a spindle

of the driving device is inserted, wherein an inner peripheral portion and an opening edge portion of the center hole are all made of resin.

2. A hub for optical recording medium, said hub comprising a resin member having a cylindrical portion, a flange portion extended outward from the cylindrical portion, and a bottom portion blockading one end of the cylindrical portion and provided with a center hole into which a spindle of an optical disk driving device is inserted, and an annular metallic member being an annular body embedded in the bottom portion of the resin member with surrounding the center hole and capable of being attracted by a magnet of the optical disk driving device, wherein:

an inner peripheral portion and an opening edge portion of the center hole in the bottom portion of the resin member are all made of resin.

3. A hub for optical recording medium, said hub comprising a resin member having a column-like portion, a flange portion extended outward from the column-like portion, and a center hole penetrating the column-like portion and opening at both end surfaces thereof, into which a spindle of an optical disk driving device is inserted, and an annular metallic member being an annular body embedded in one end surface of the column-like portion with surrounding the center hole and capable of being attracted by a magnet of the optical disk driving device, wherein:

an inner peripheral portion and an opening edge portion of the center hole in the column-like portion of the resin member are all made of resin.

4. An optical recording medium comprising a disk substrate body with a recording layer and a hub fitted into a central opening provided in the disk substrate body, wherein:

said hub comprising a metallic member capable of being attracted by a magnet of an optical disk driving device and a resin member having a center hole into which a spindle of the driving device is inserted, and an inner peripheral portion and an opening edge portion of the center hole in the metallic member and the resin member being all made of resin.

5. An optical recording medium comprising a disk substrate body with a recording layer and a hub fitted into a central opening provided in the disk substrate body, wherein:

the hub comprises a resin member having a cylindrical portion inserted into the central opening of the disk substrate body, a flange portion extended outward from the cylindrical portion to cover an opening edge circumferential surface of the central opening, and a bottom portion blockading one end of the cylindrical portion and provided with a center hole into which a spindle of an optical disk driving device is inserted, and an annular metallic member being an annular body embedded in the bottom portion of the resin member with surrounding the center hole and capable of being attracted by a magnet of the optical disk driving device; and

an inner peripheral portion and an opening edge portion of the center hole in the bottom portion of the resin member are all made of resin.

6. The optical recording medium as claimed in claim 5, wherein the disk substrate and the hub are bonded and fixed to each other by means of an adhesive layer formed between the opening edge surface of the central opening and the flange portion of the hub and between the inner peripheral portion of the central opening and the cylindrical portion.

7. An optical recording medium comprising plural disk substrate bodies laminated one upon another, at least one of said substrate bodies having a recording layer, and two hubs fitted into central openings provided in the disk substrate bodies from both sides, wherein:

the hub comprises a resin member and an annular metallic member, said resin member having a column-like portion inserted into the central opening of the disk substrate body, a flange portion extended outward from the column-like portion to cover an opening edge surface of the central opening, and a center hole penetrating the column-like portion and opening at both end surfaces thereof, into which a spindle of an optical disk driving device is inserted, said annular metallic member being an annular body embedded in an outward end surface of the column-like portion with surrounding the center hole and capable of being attracted by a magnet of the optical disk driving device; and

an inner peripheral portion and an opening edge portion of the center hole in the column-like portion of the resin member are made of resin.

**8.** The optical recording medium as claimed in claim 7, wherein the plural disk substrate bodies are laminated one upon another directly or by way of spacer.

**9.** The optical recording medium as claimed in claim 8, wherein the number of the disk substrate bodies is two.

**10.** The optical recording medium as claimed in claim 7, wherein the disk substrate bodies and the two hubs are bonded and fixed to each other by means of an adhesive layer formed between the opening edge surface of the central opening and the flange portion of the hub, between the inner peripheral portion of the central opening and the cylindrical portion, and between inward end surfaces of the two hubs.

**11.** A hub for optical recording medium, said hub having a center hole into which a spindle of a disk driving device is inserted and capable of being attracted by a clamping magnet provided on a turn table of the disk driving device, wherein:

an insertion opening portion of the center hole of the hub is sectionally extended straight toward the opening end.

**12.** The hub for optical recording medium as claimed in claim 11, wherein a difference between a radius of the opening end of the insertion opening portion and a radius of the center hole is in the range of 0.02 to 2.0 mm.

**13.** The hub for optical recording medium as claimed in claim 11, wherein a difference between a radius of the opening end of the insertion opening portion and a radius of the center hole is in the range of 0.1 to 0.5 mm.

**14.** The hub for optical recording medium as claimed in any of claims 11 to 13, wherein an external angle between an extending surface of the insertion opening portion and an upper surface of the hub is in the range of 10 to 80°.

**15.** The hub for optical recording medium as claimed in any of claims 11 to 13, wherein an external angle between an extending surface of the insertion opening portion and an upper surface of the hub is in the range of 30 to 80°.

**16.** The hub for optical recording medium as claimed in any of claims 11 to 13, wherein an external angle between an extending surface of the insertion opening portion and an upper surface of the hub is in the range of 50 to 80°.

**17.** A hub for optical recording medium, said hub having a center hole into which a spindle of a disk driving device is inserted and capable of being attracted by a clamping magnet provided on a turn table of the disk driving device, wherein:

an insertion opening portion of the center hole of the hub is sectionally extended in the form of an arc toward the opening end at a curvature radius (R) of more than 0.2 mm and not more than 2.0 mm.

**18.** The hub for optical recording medium as claimed in claim 17, wherein the curvature radius (R) is in the range of 0.3 mm to 0.5 mm.

**19.** The hub for optical recording medium as claimed in claim 11 or claim 18, wherein the insertion opening portion and/or the inner peripheral portion of the center hole is made of resin.

**20.** The hub for optical recording medium as claimed in any of claims 11 to 19, wherein a lubricant layer is provided on the insertion opening portion or in the vicinity of the insertion opening portion.

**21.** An optical recording medium provided with the hub as claimed in any of claims 11 to 20.

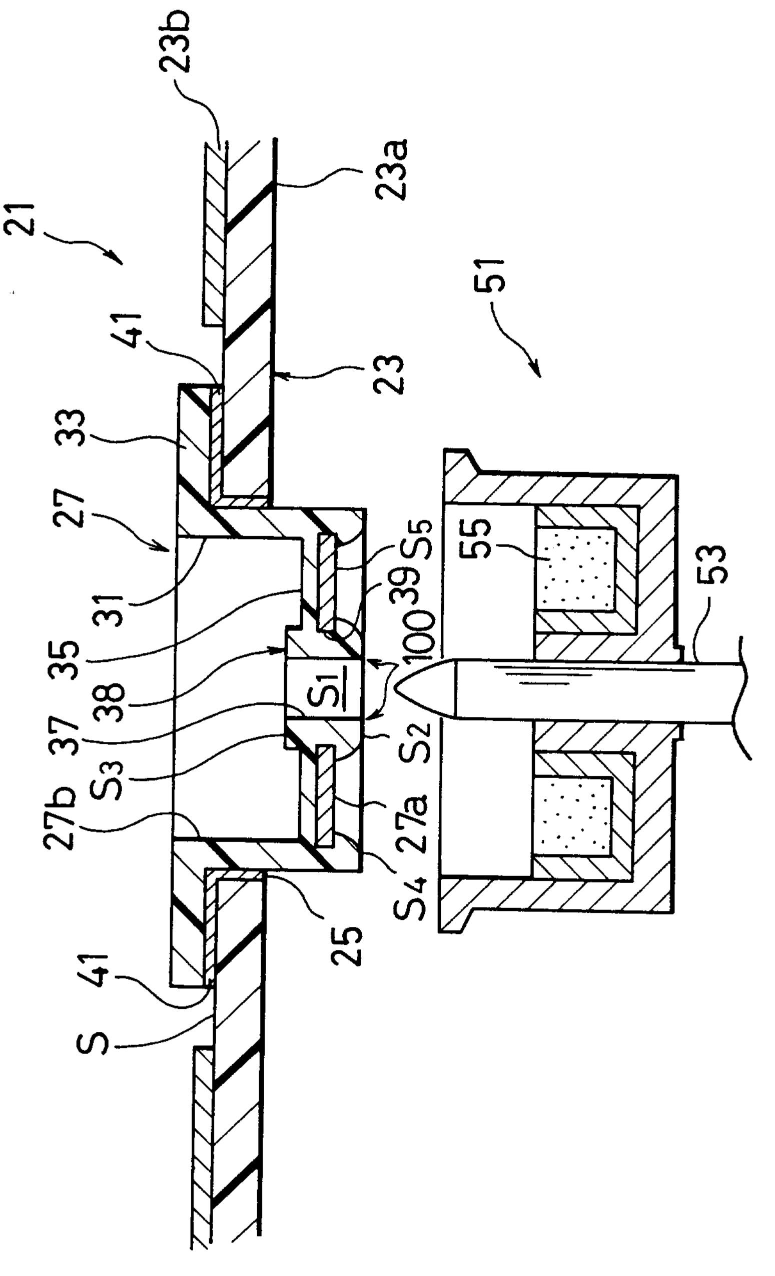
21
23b
23a
23
41
33
27
31
35
38
37
S1
S2
S3
S4
S5
27b
27a
39
100
25
41
S
51
55
53

Fig. 1

Fig. 2

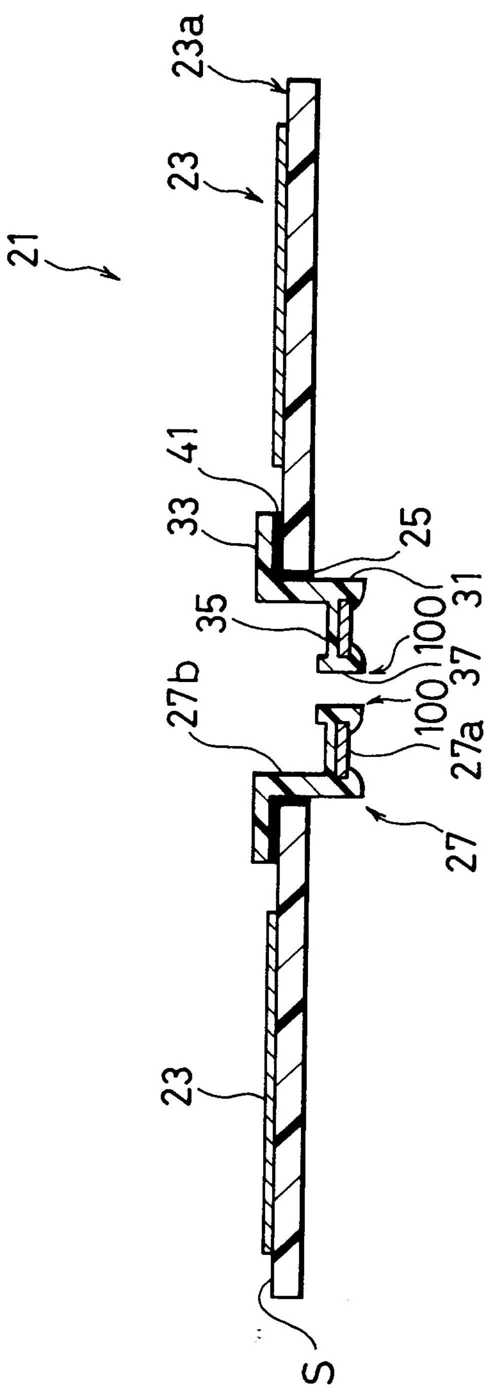

Fig. 3

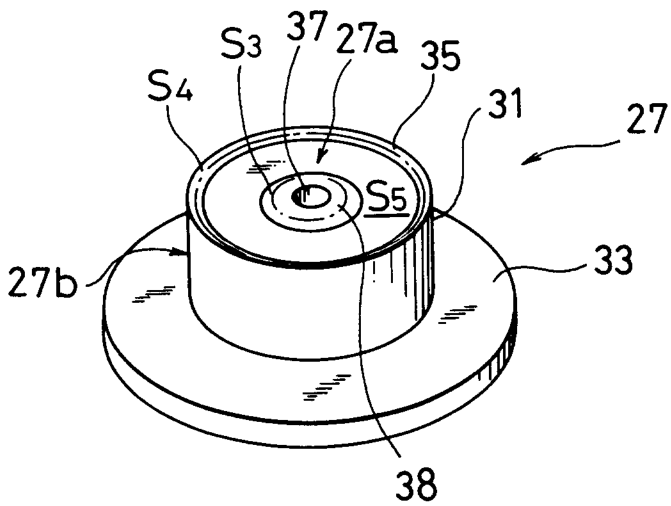

*Fig. 4*

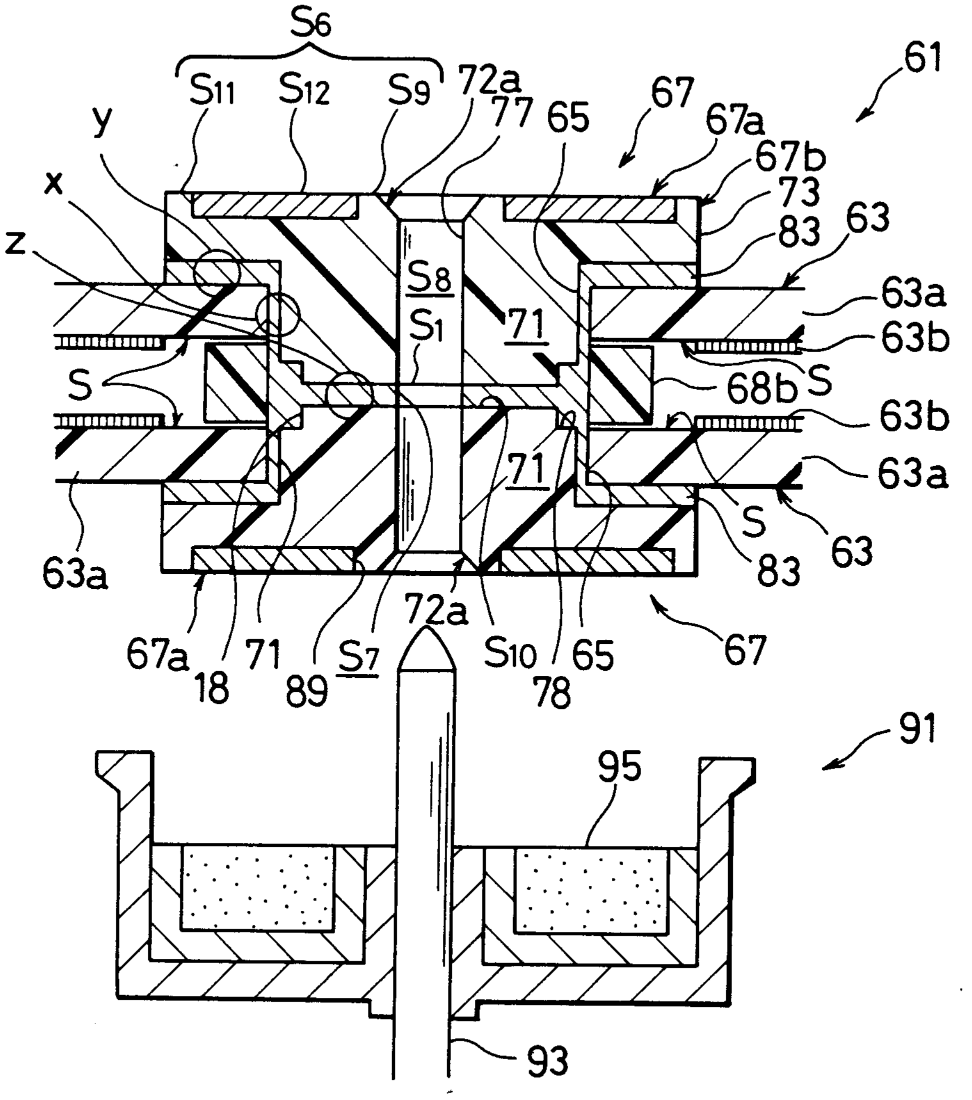
S6
S11
S12
S9
72a
77
65
67
67a
67b
61
y
x
z
73
83
63
63a
63b
S8
S1
71
68b
S
S
63a
67a
18
71
89
S7
72a
S10
78
65
67
83
63
91
95
93

*Fig. 5*

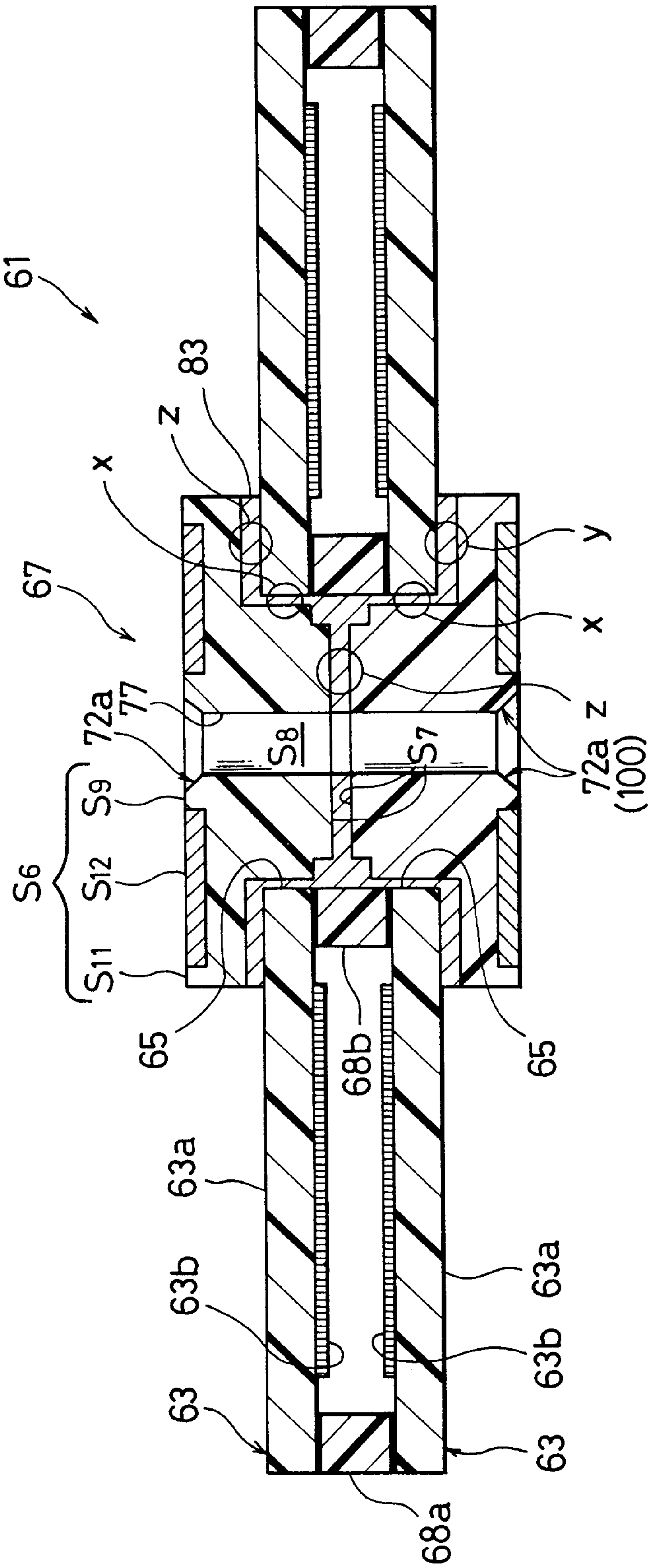

61
83
z
x
y
67
x
z
77
72a
$S_8$
$S_7$
72a
(100)
$S_6$
$S_9$
$S_{12}$
$S_{11}$
65
68b
65
63a
63a
63b
63b
63
63
68a

Fig. 6

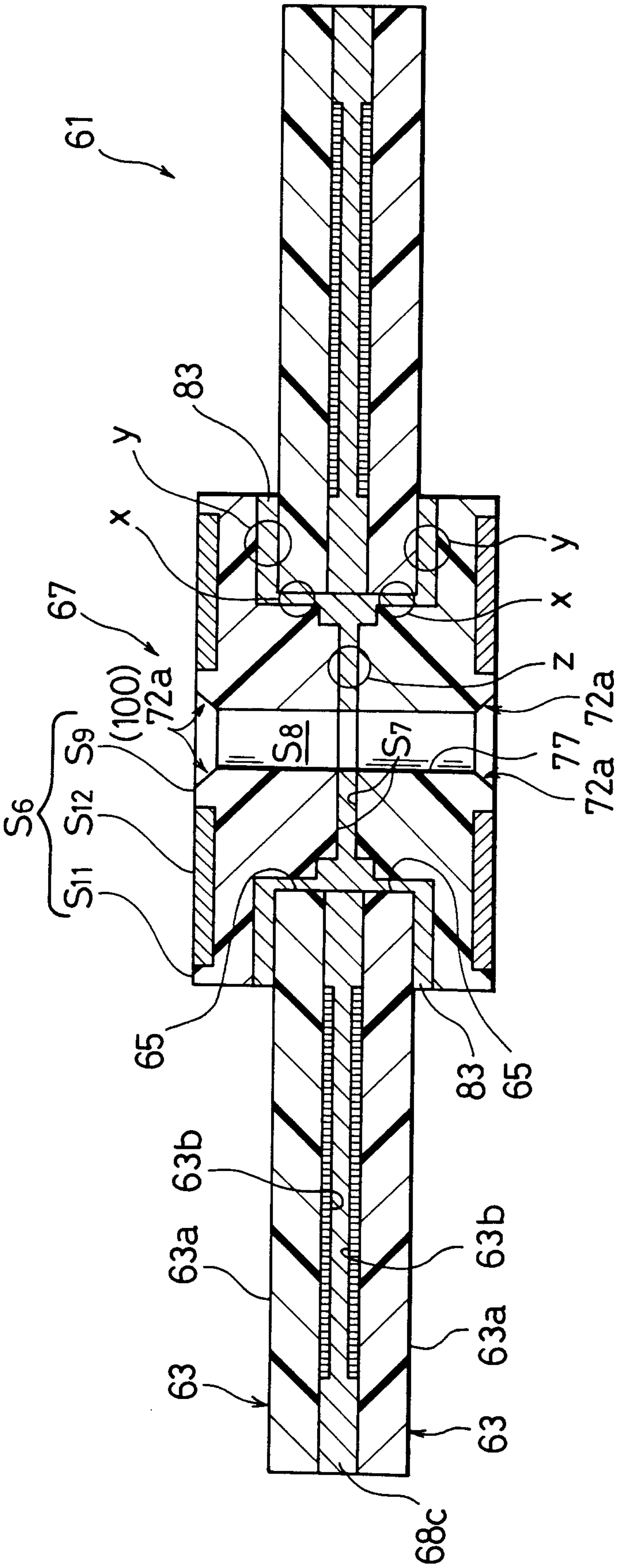

Fig. 7

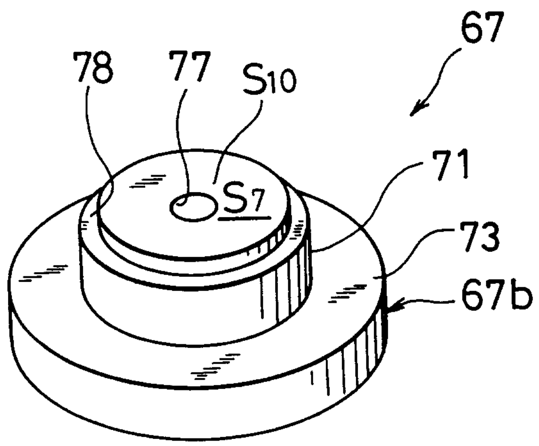


Fig. 8

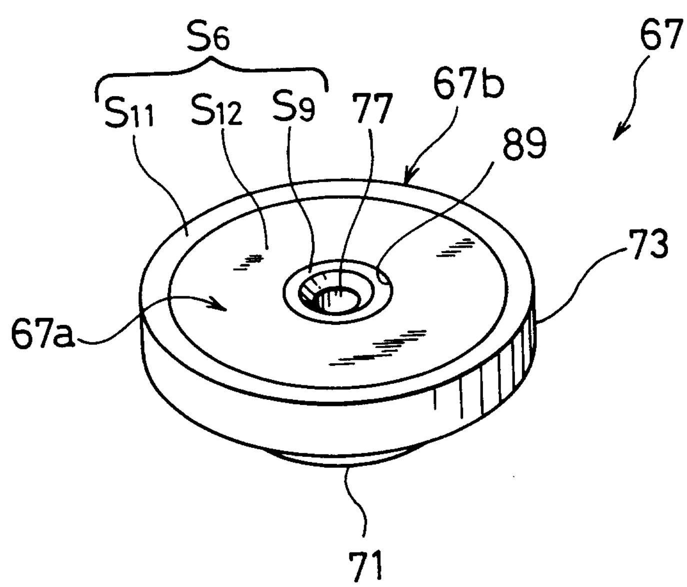

*Fig. 9*

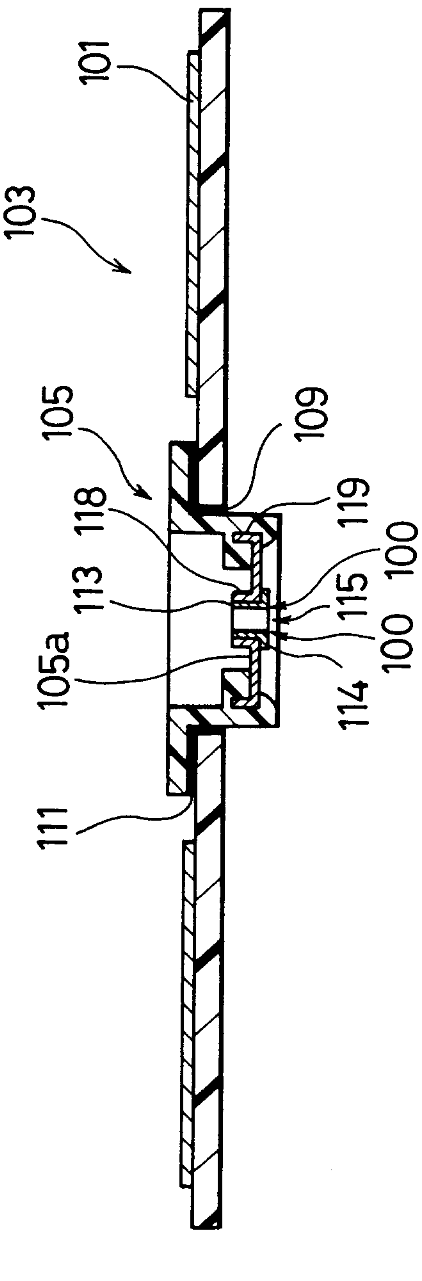

*Fig. 10*

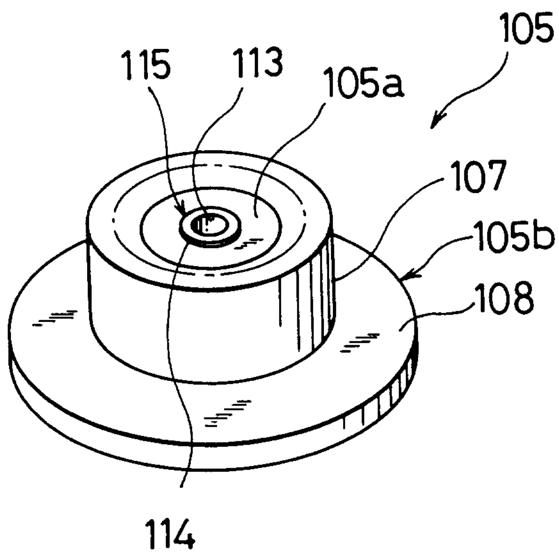

Fig. 11

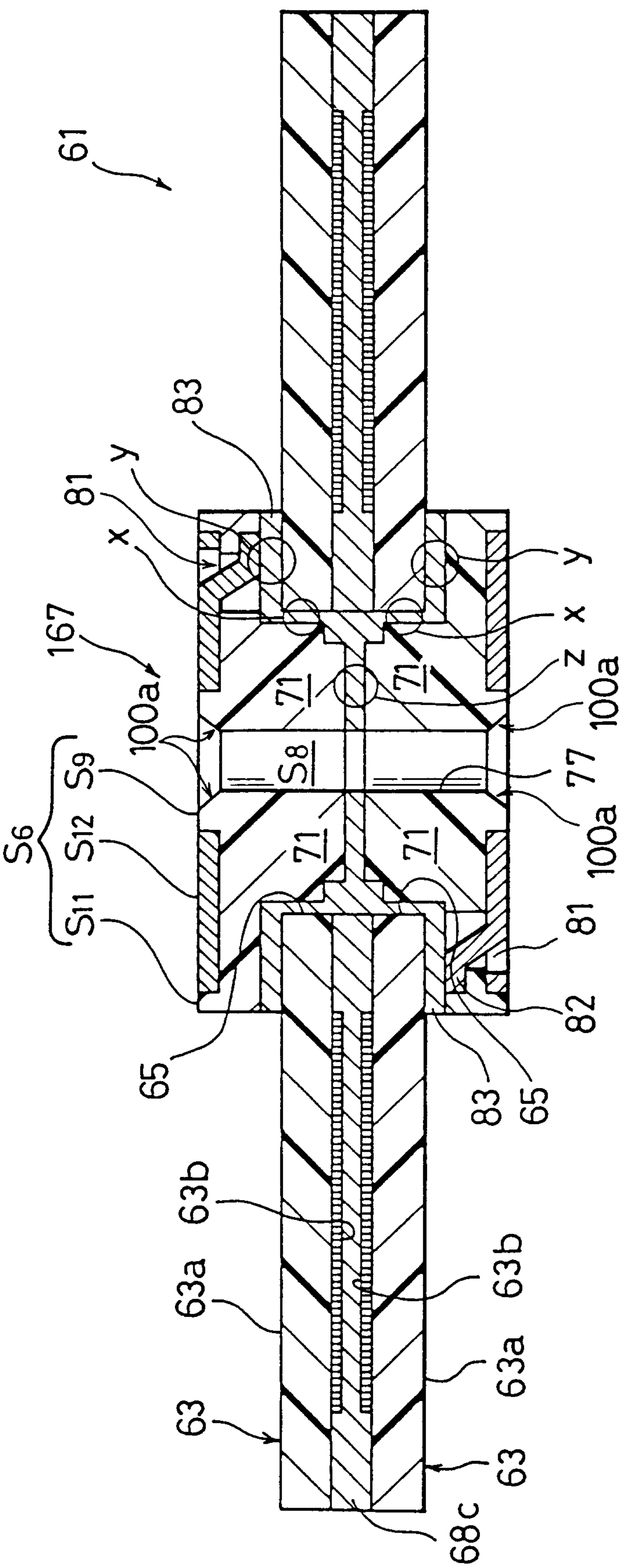

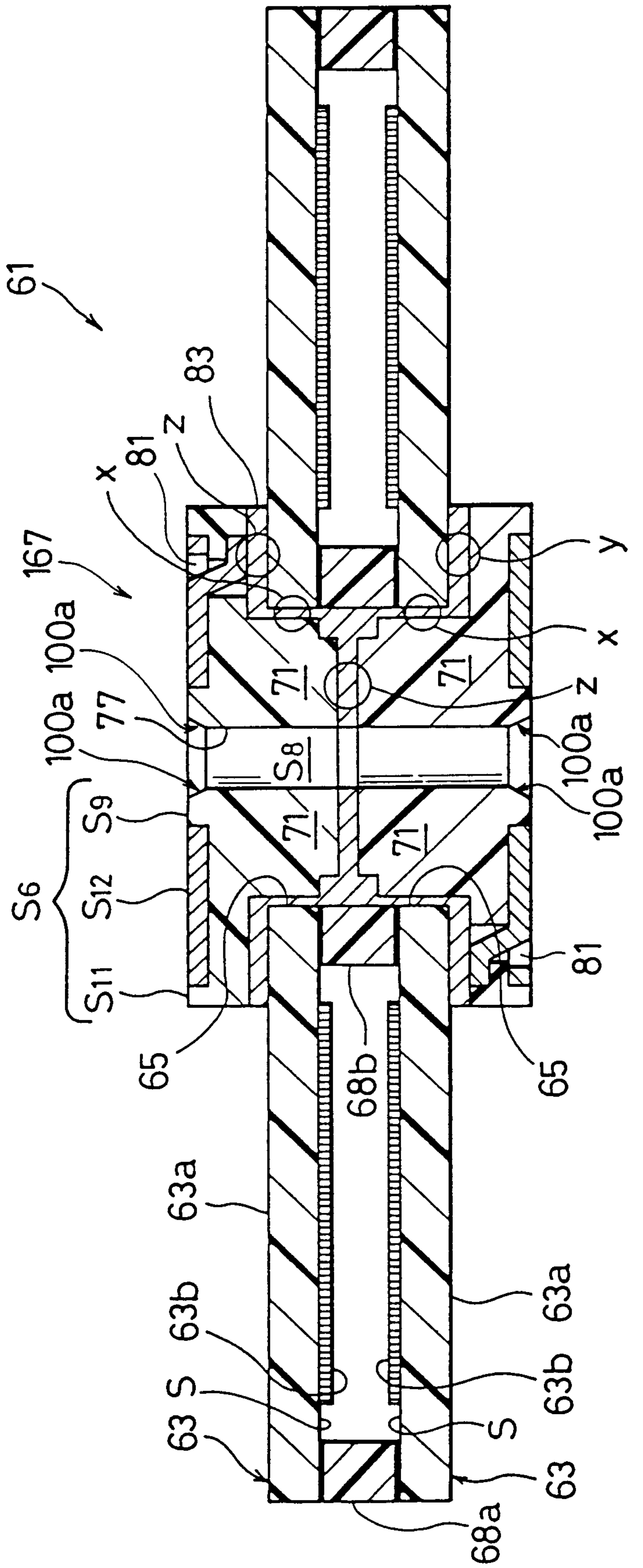
61
167
83
81
z
x
y
x
z
71
77
100a
S8
S9
S12
S11
S6
65
68b
63a
63b
S
63
68a

Fig. 12

Fig. 13

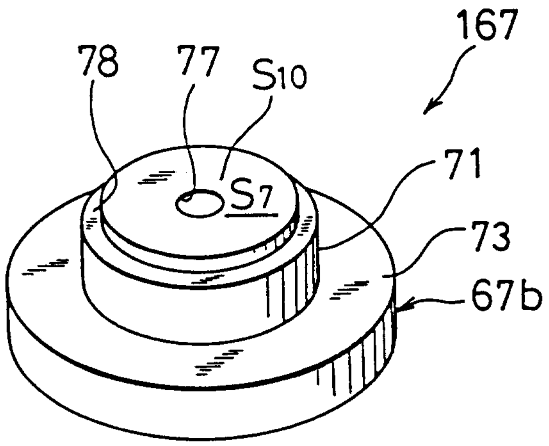
167
78
77
S10
S7
71
73
67b

Fig. 14

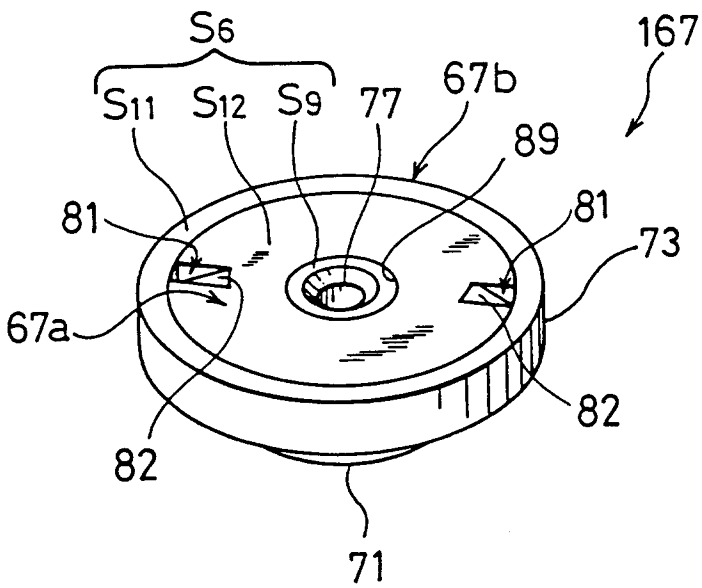
S6
S11
S12
S9
77
67b
167
89
81
81
73
67a
82
82
71

*Fig. 15*

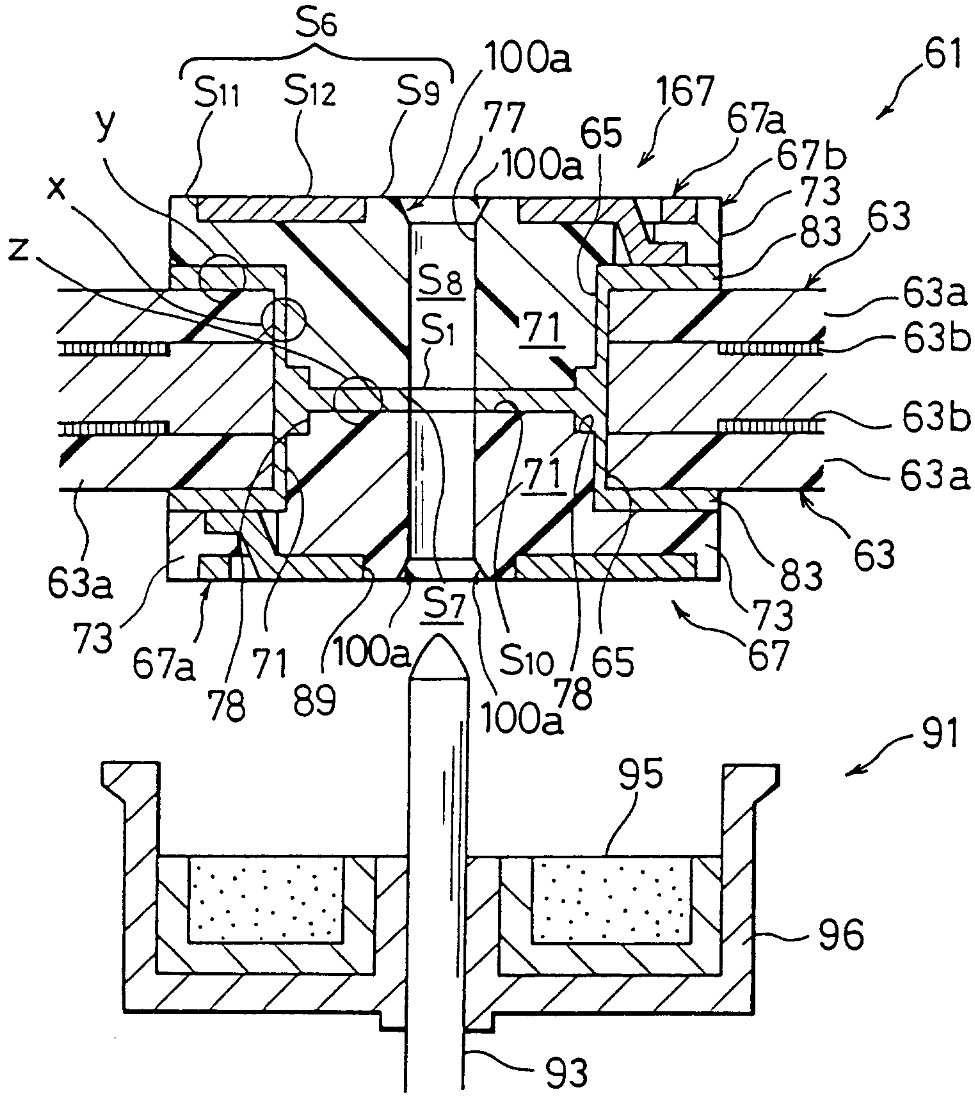
S6
S11
S12
S9
100a
61
167
77
65
67a
y
100a
67b
73
x
83
63
z
S8
63a
71
S1
63b
63b
71
63a
63
83
63a
63
73
73
67
S7
67a
71
100a
S10
65
78
89
78
100a
91
95
96
93

*Fig. 16*

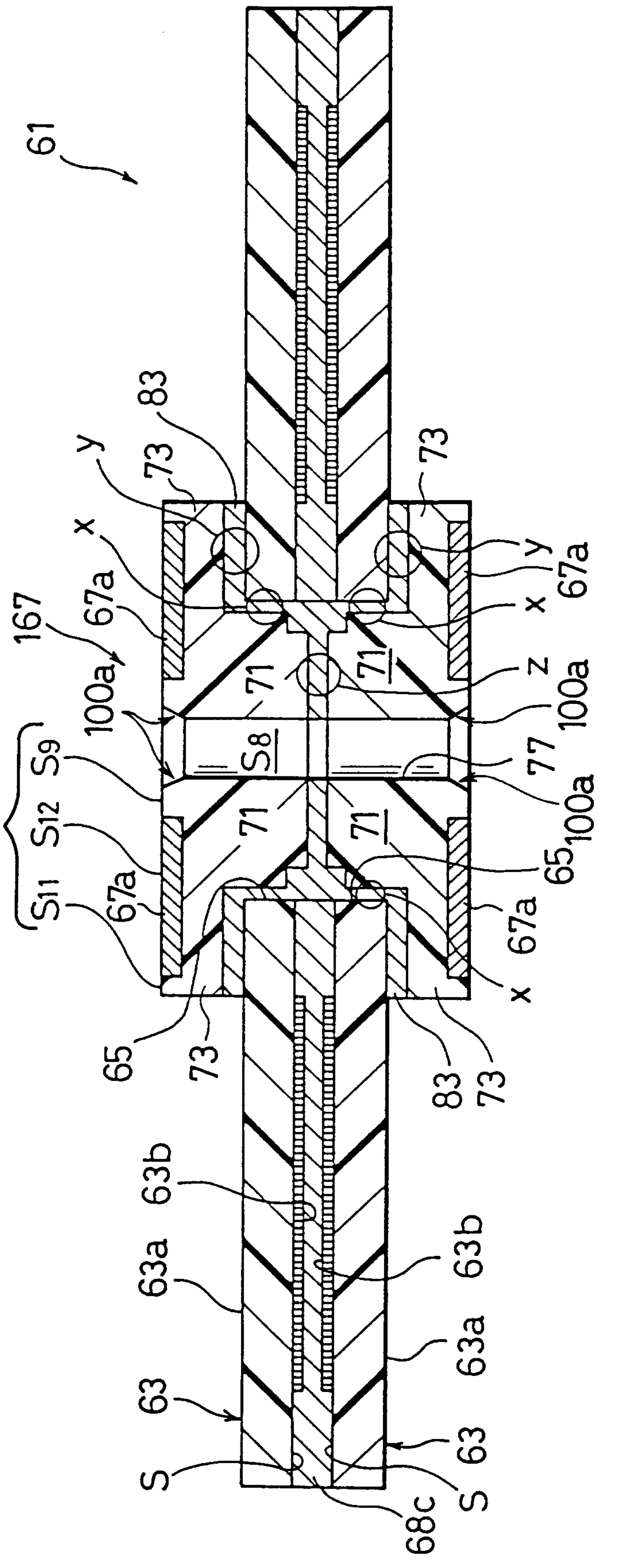

Fig. 17

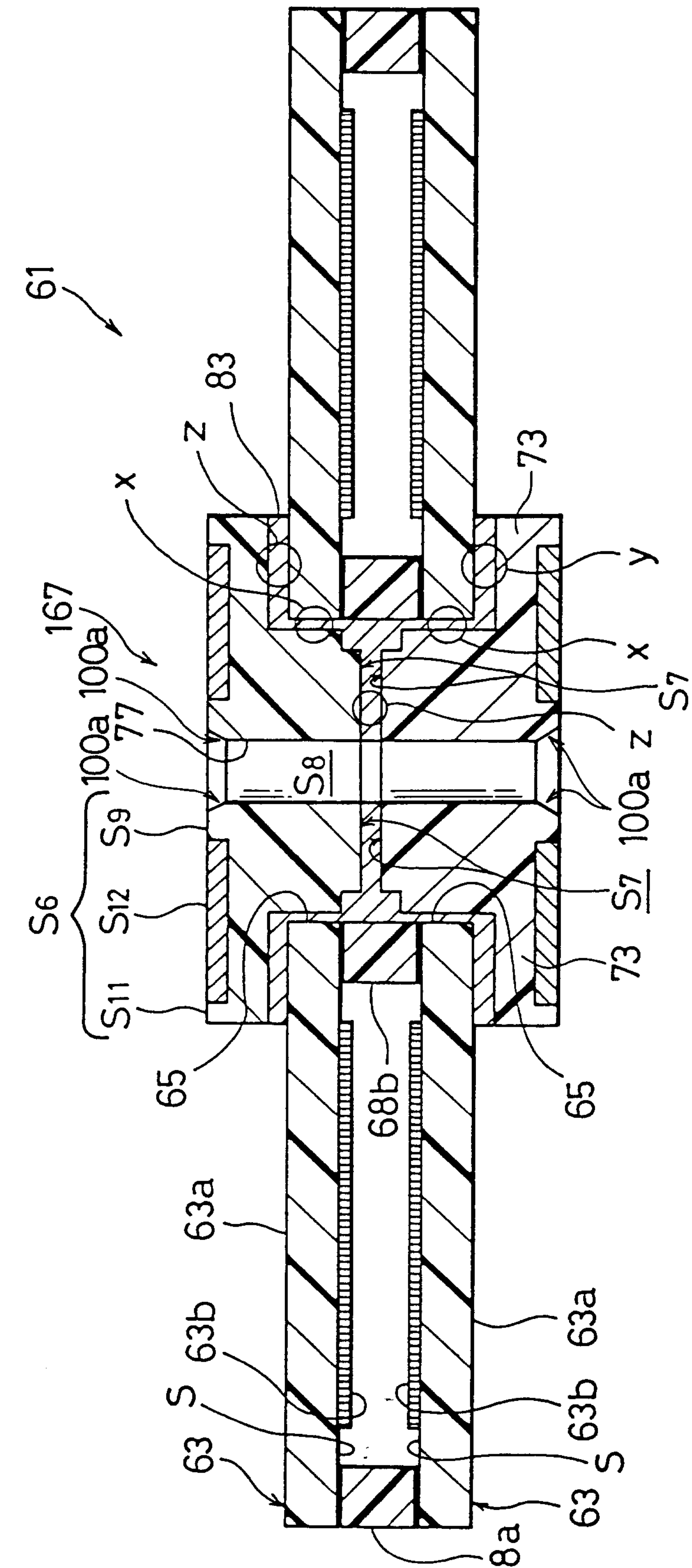
61
83
z
x
73
y
167
100a
100a
100a
77
S8
x
S7
z
100a
S6
S9
S12
S11
S7
73
65
68b
65
63a
63a
63b
63b
S
S
63
63
68a

Fig. 18

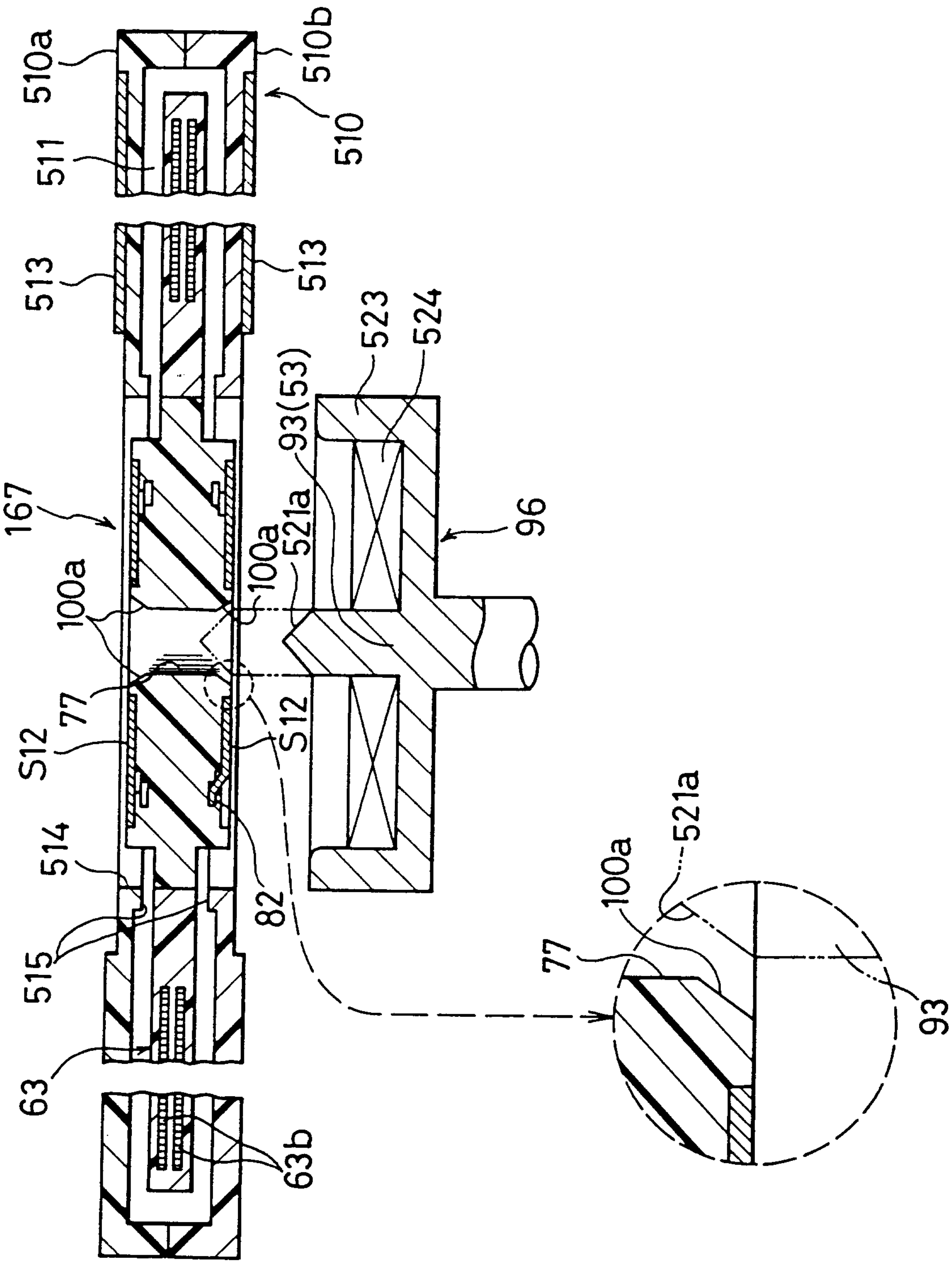
510a
510b
511
510
513
513
523
524
93(53)
521a
100a
96
167
100a
77
512
512
514
82
515
63
63b
77
100a
521a
93

*Fig. 19*

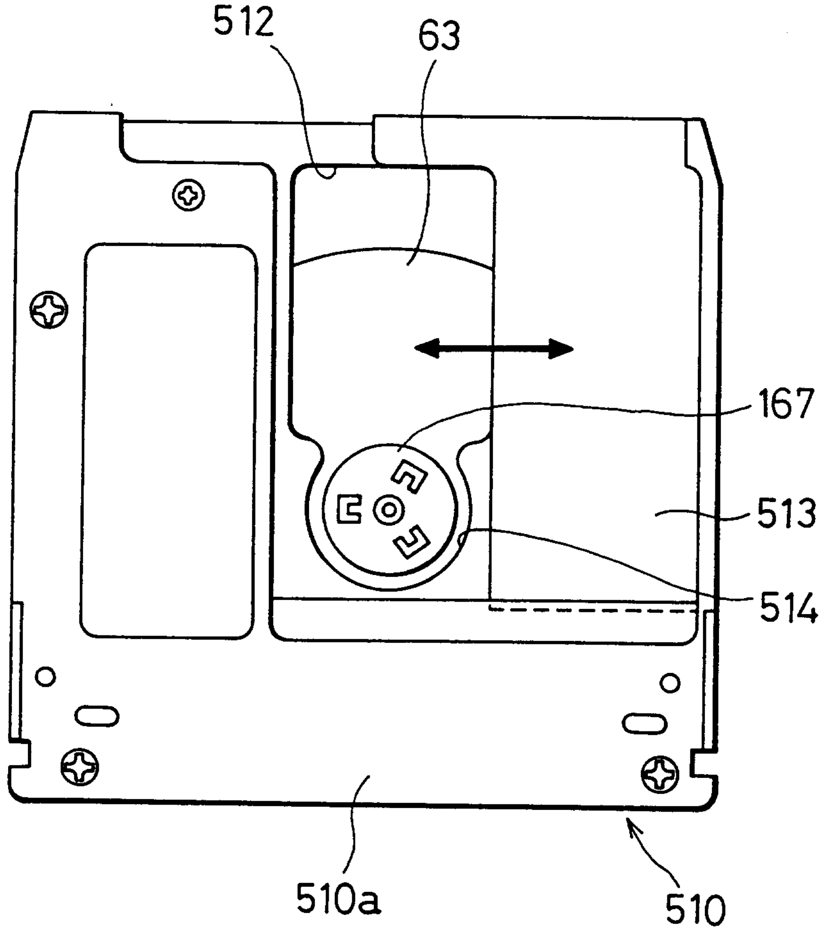

*Fig. 20 (a)*

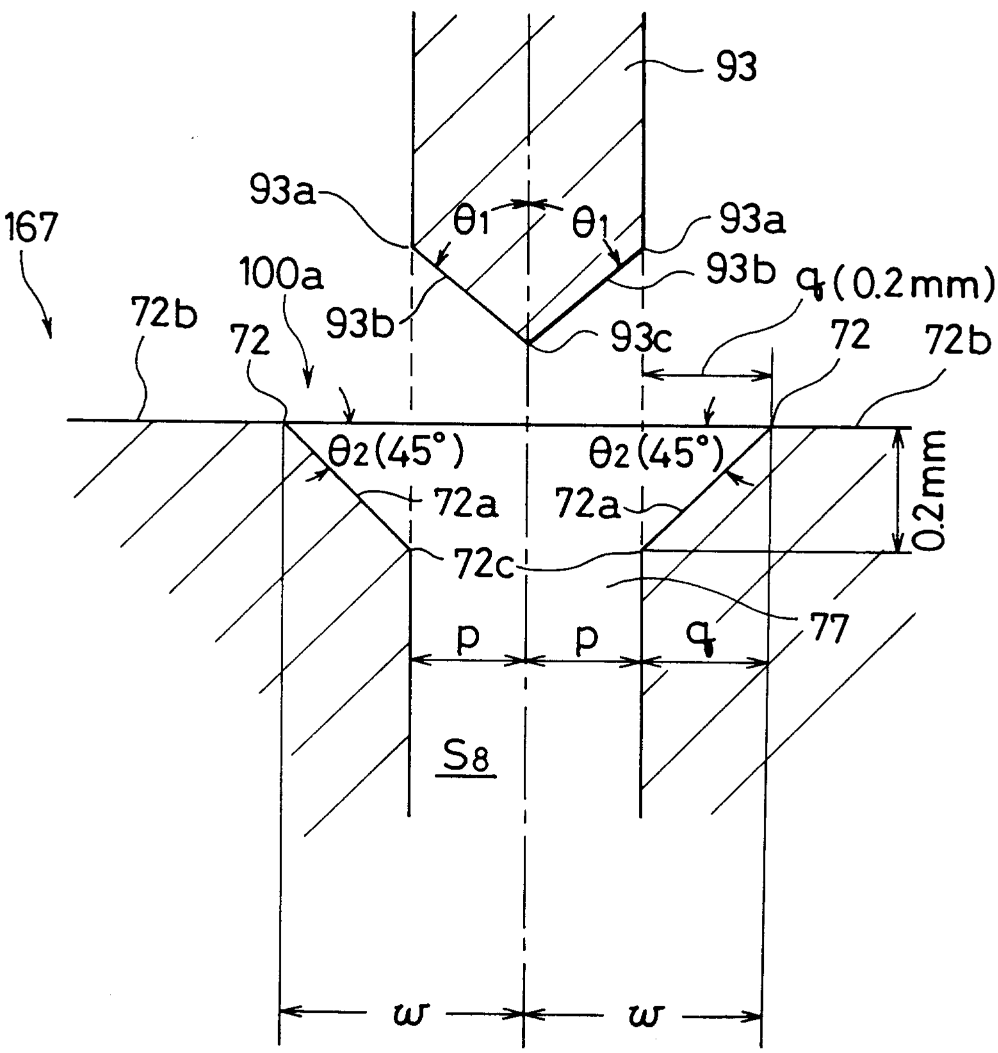
93
93a
θ1
θ1
93a
167
100a
93b
93b
q (0.2mm)
72b
72
93b
93c
72
72b
θ2(45°)
θ2(45°)
72a
72a
0.2mm
72c
77
p
p
q
S8
w
w

Fig. 20 (b)

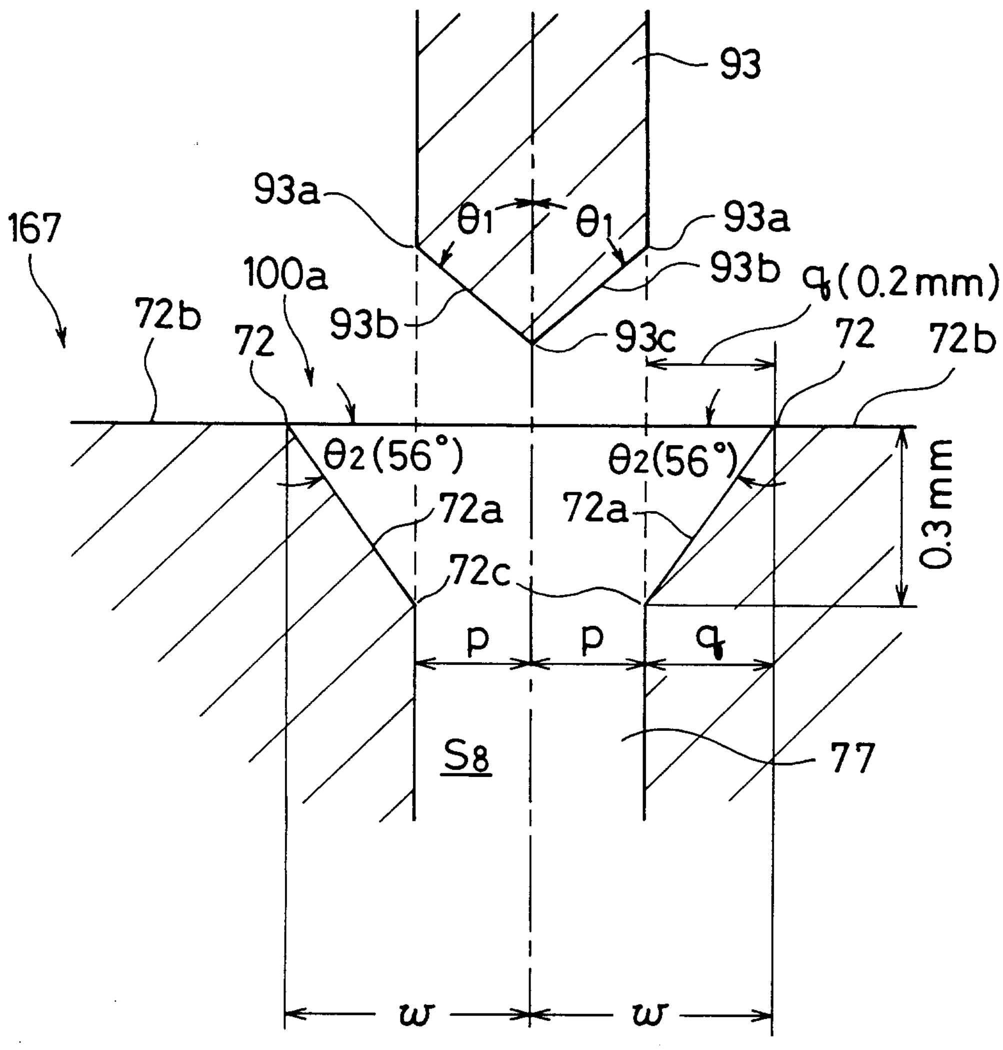
93
93a
θ1
θ1
93a
167
100a
93b
93b
q(0.2mm)
72b
72
93c
72
72b
θ2(56°)
θ2(56°)
72a
72a
0.3mm
72c
p
p
q
S8
77
w
w

*Fig. 20 (c)*

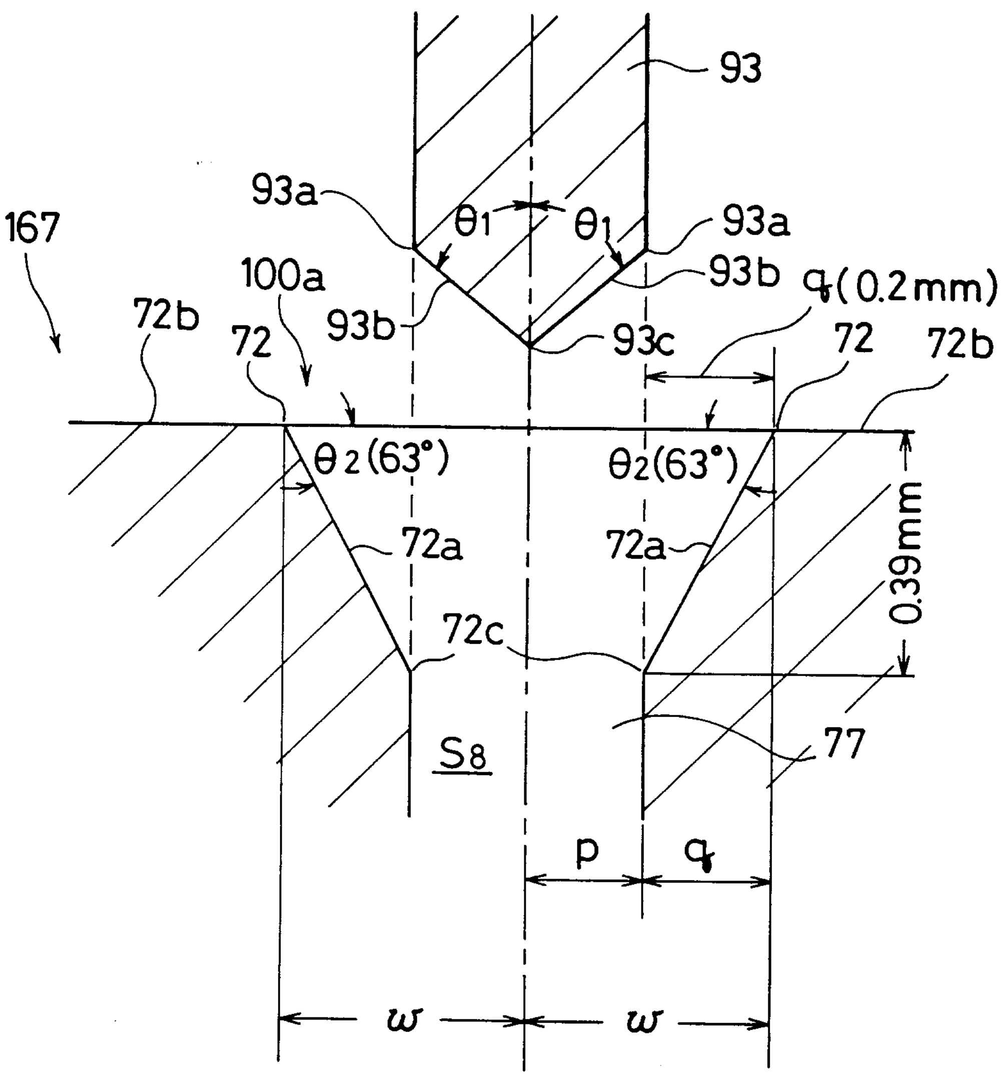
93
93a
θ1
θ1
93a
93b
93b
93c
167
100a
72b
72
q(0.2mm)
72
72b
θ2(63°)
θ2(63°)
72a
72a
0.39mm
72c
S8
77
p
q
w
w

Fig. 21 (a)

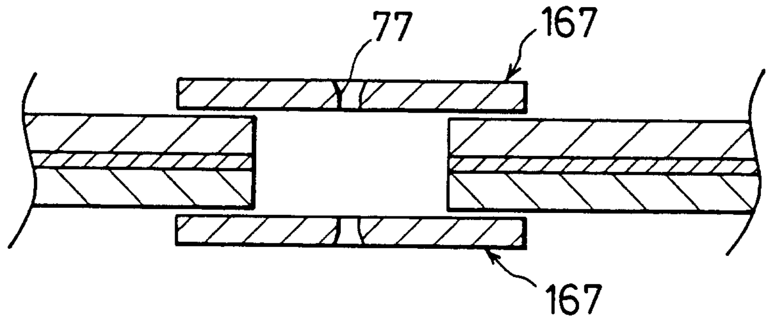


Fig. 21 (b)

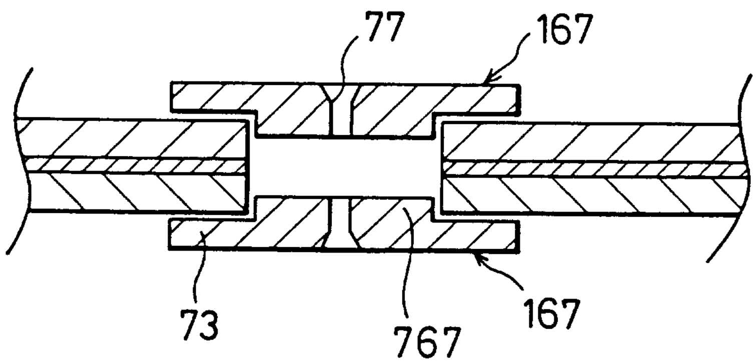

Fig. 22 (a)

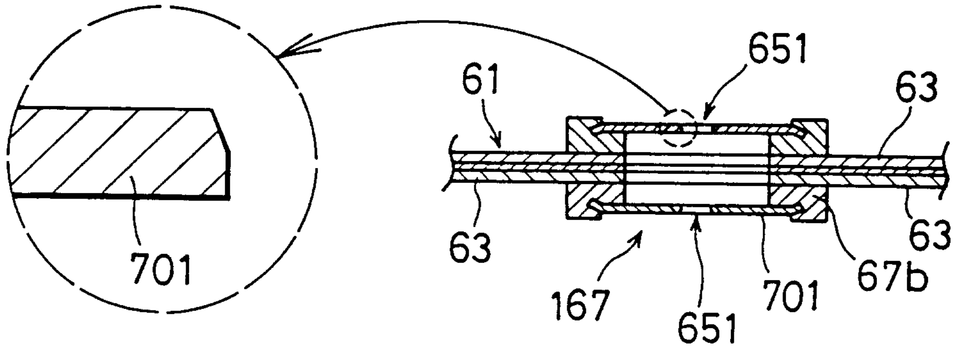


Fig. 22 (b)

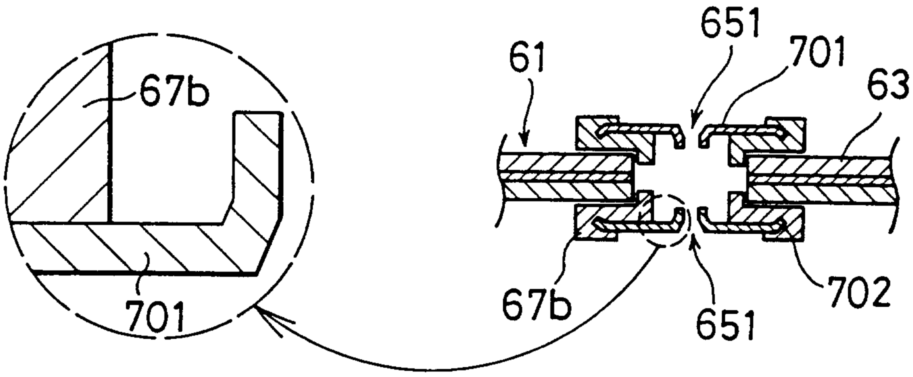

Fig. 23

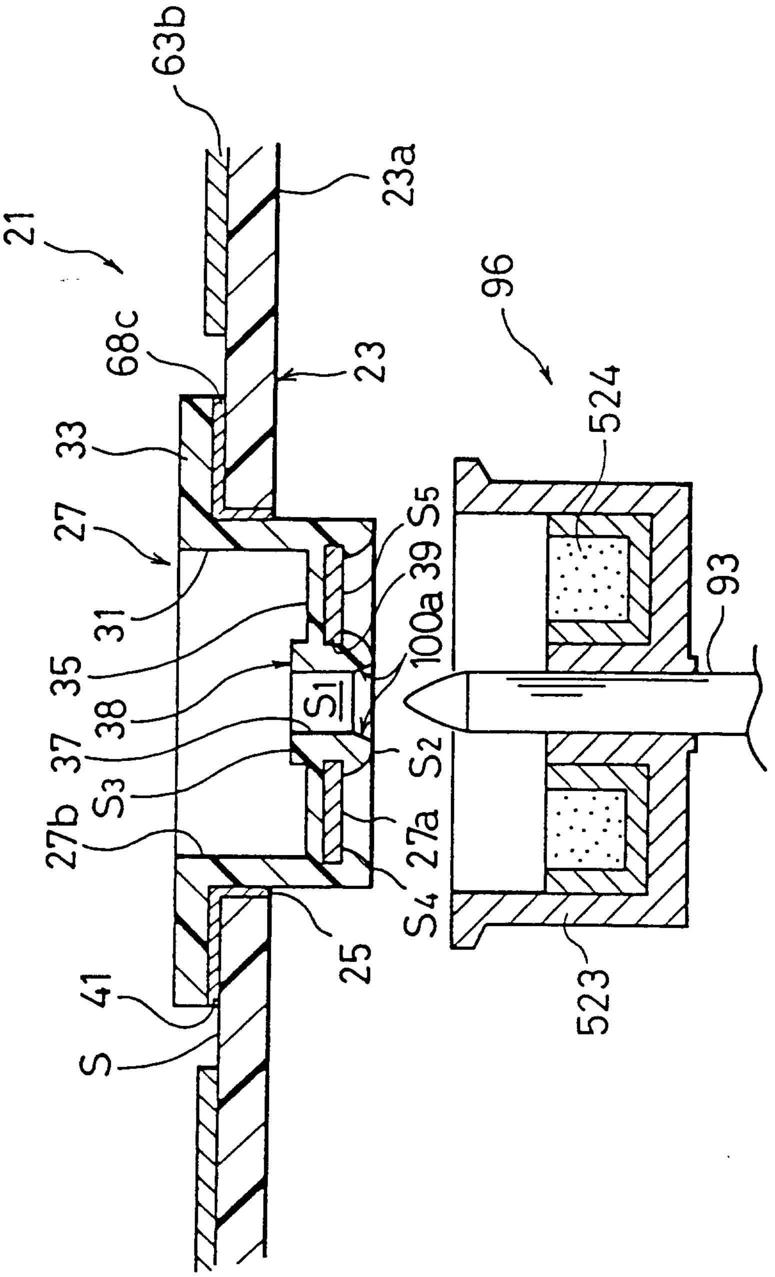
63b
23a
21
96
68c
23
524
33
27
S5
39
93
31
35
100a
38
S1
37
S2
S3
27b
27a
S4
25
523
41
S

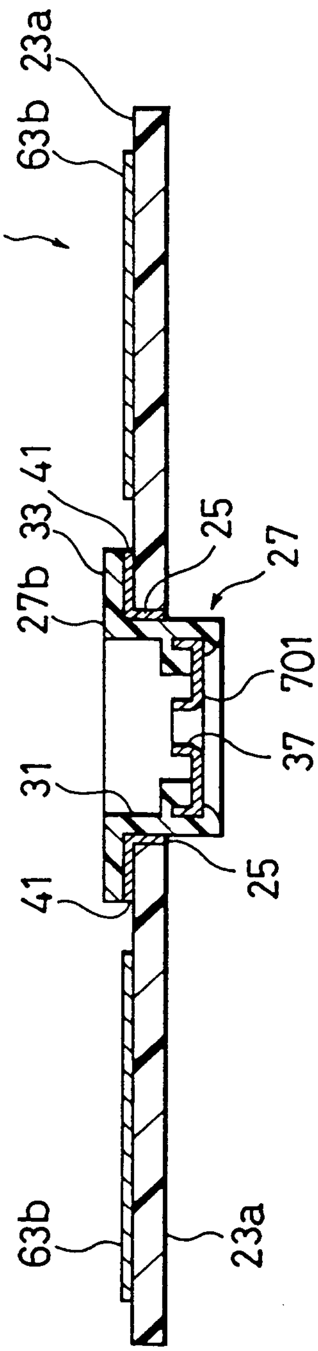


*Fig. 24*

*Fig. 25*

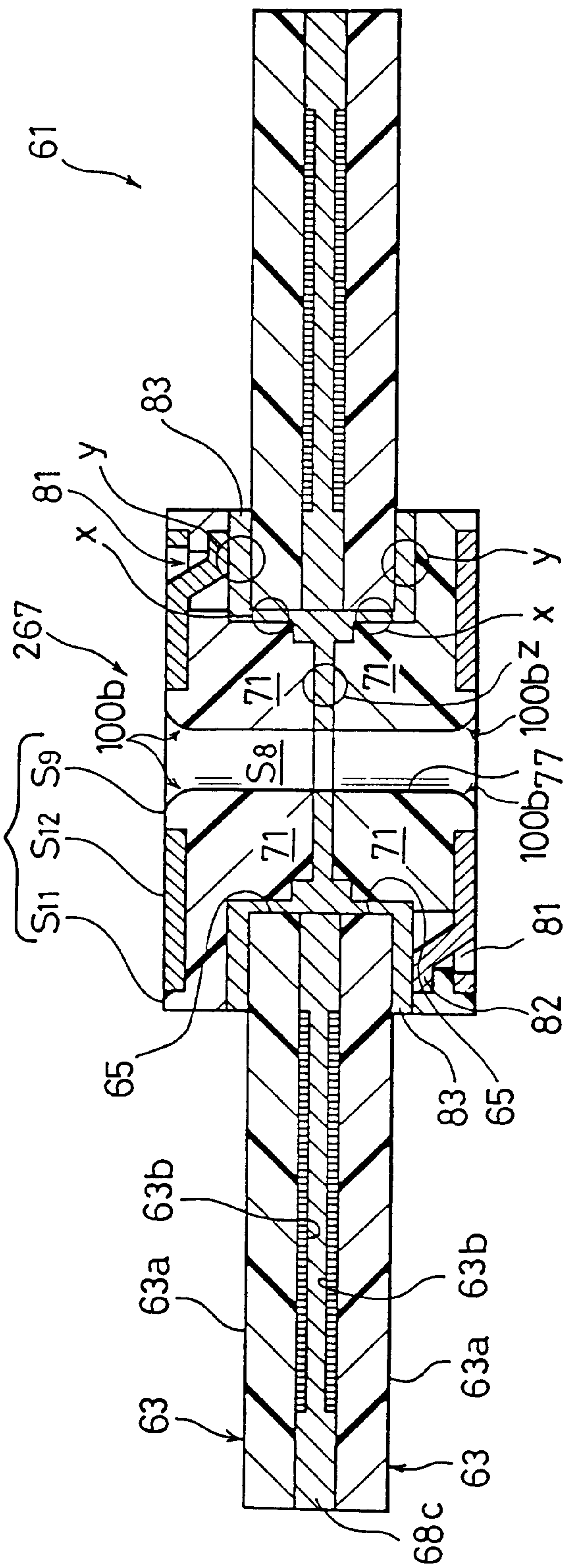

*Fig. 26*

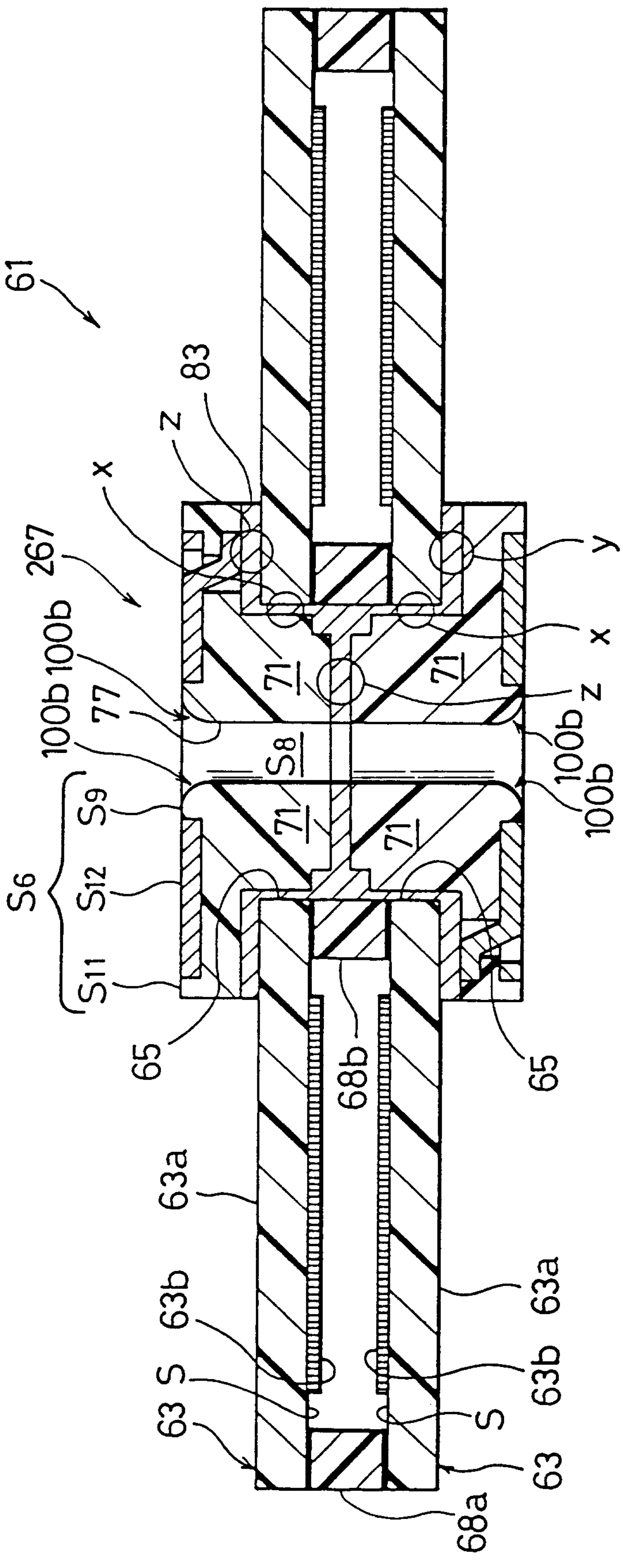
61
83
z
x
267
y
x
100b
100b
100b
77
71
71
z
100b
S8
100b
100b
100b
S9
71
71
S6
S12
S11
65
68b
65
63a
63a
63b
63
S
63b
S
63
68a

Fig. 27

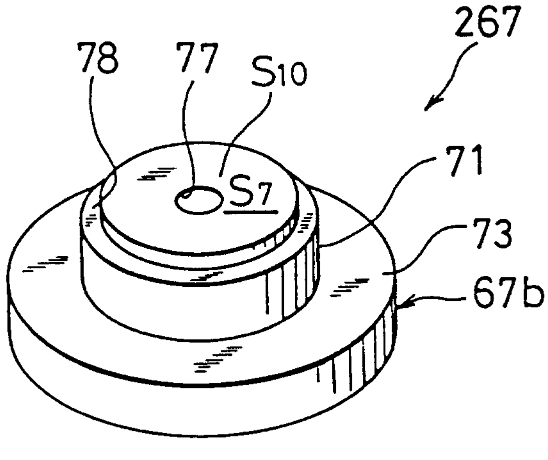

267
78
77
S10
S7
71
73
67b


Fig. 28

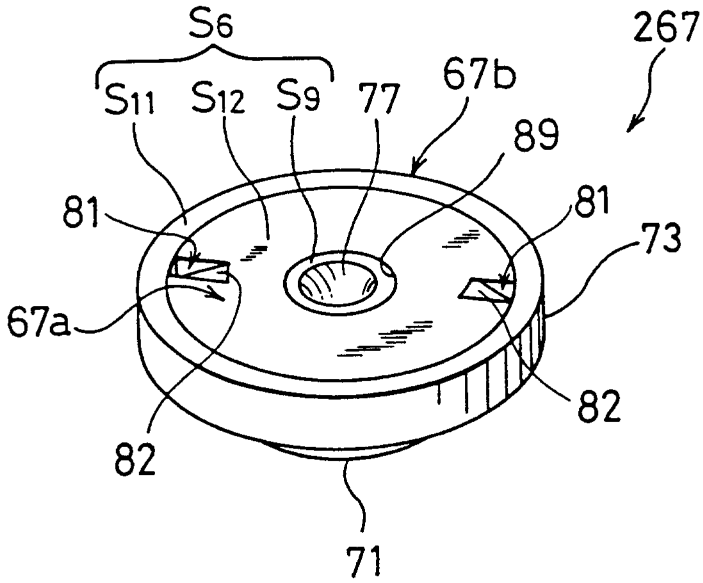

S6
S11
S12
S9
77
67b
267
89
81
81
73
67a
82
82
71

*Fig. 29*

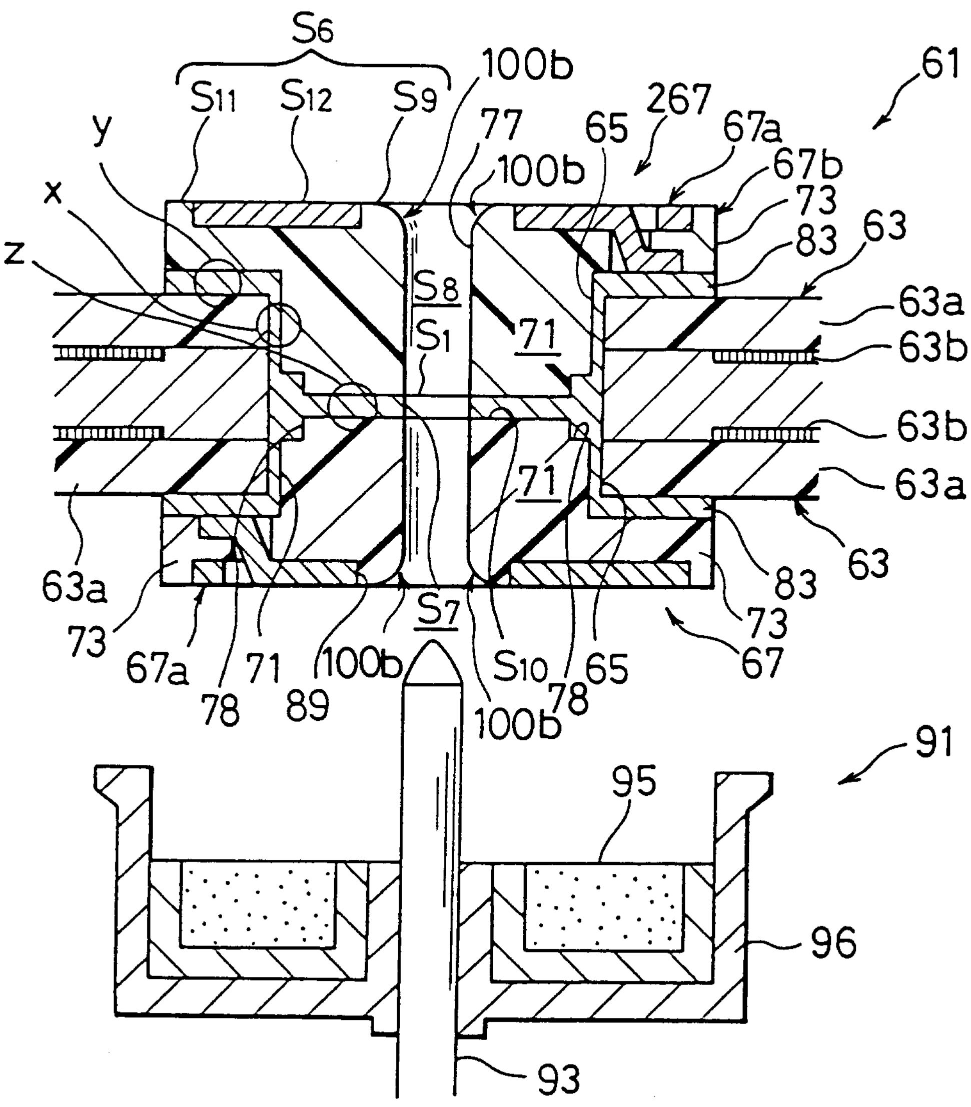
S6
S11
S12
S9
100b
61
267
y
77
65
67a
x
100b
67b
z
73
83
63
S8
63a
71
S1
63b
63b
71
63a
63a
83
63
73
73
67
67a
71
100b
S7
S10
65
78
89
100b
78
91
95
96
93

*Fig. 30*

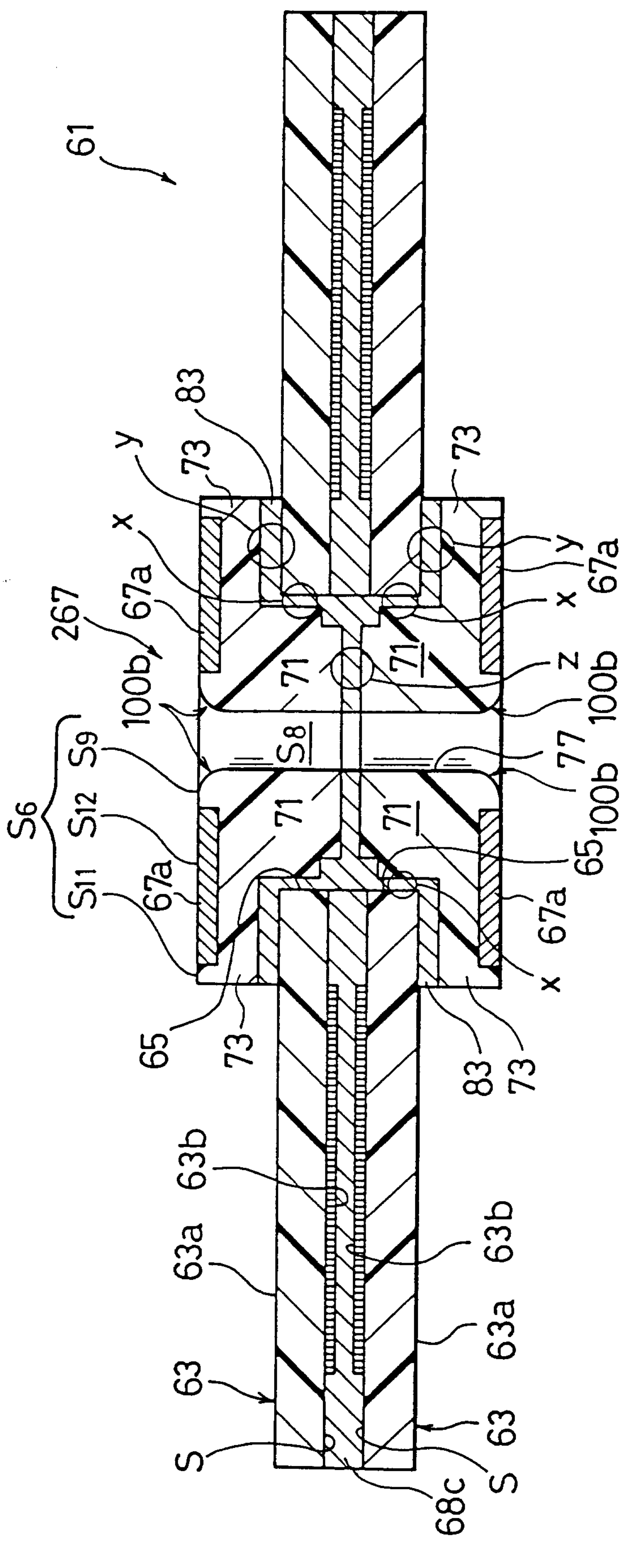
61
83
73
y
x
67a
267
100b
S6
S9
S12
S11
S8
71
z
77
65
x
y
63b
63a
63
S
68c
83
73

*Fig. 31*

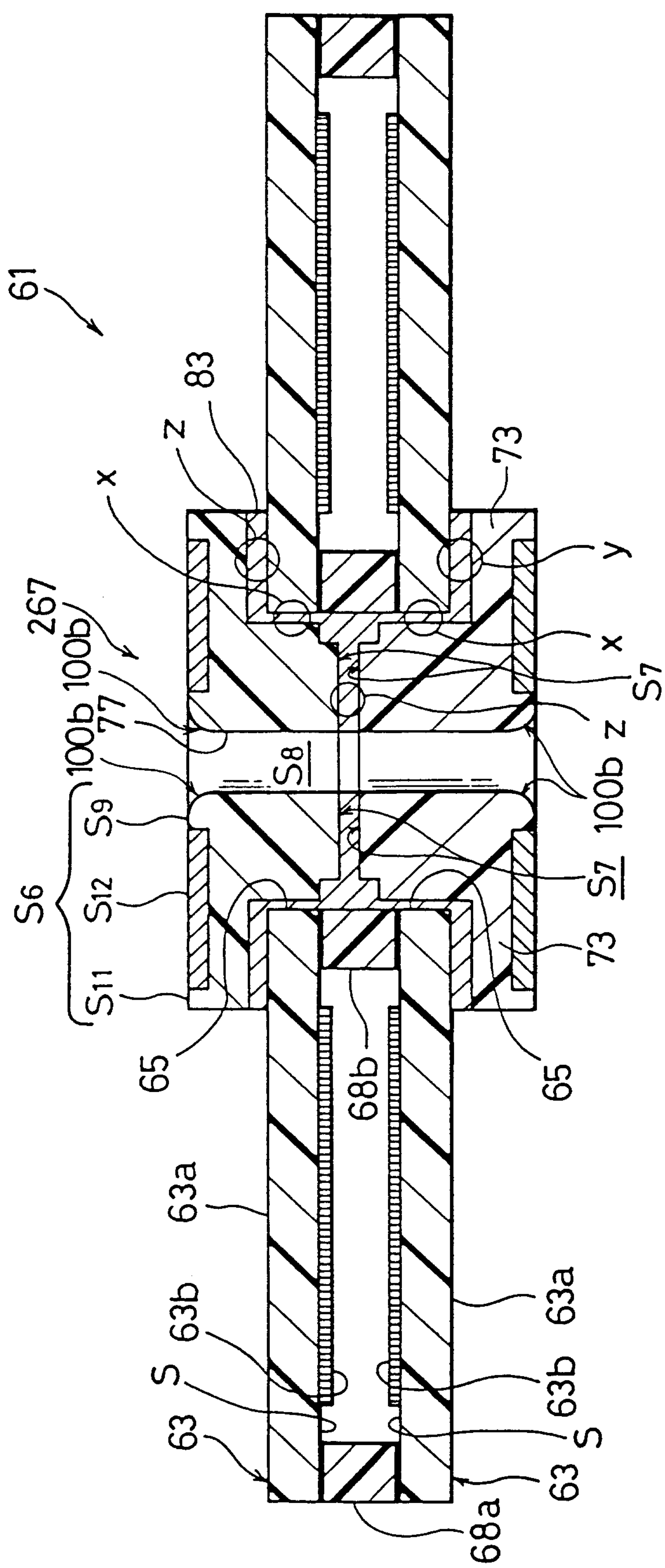

Fig. 32

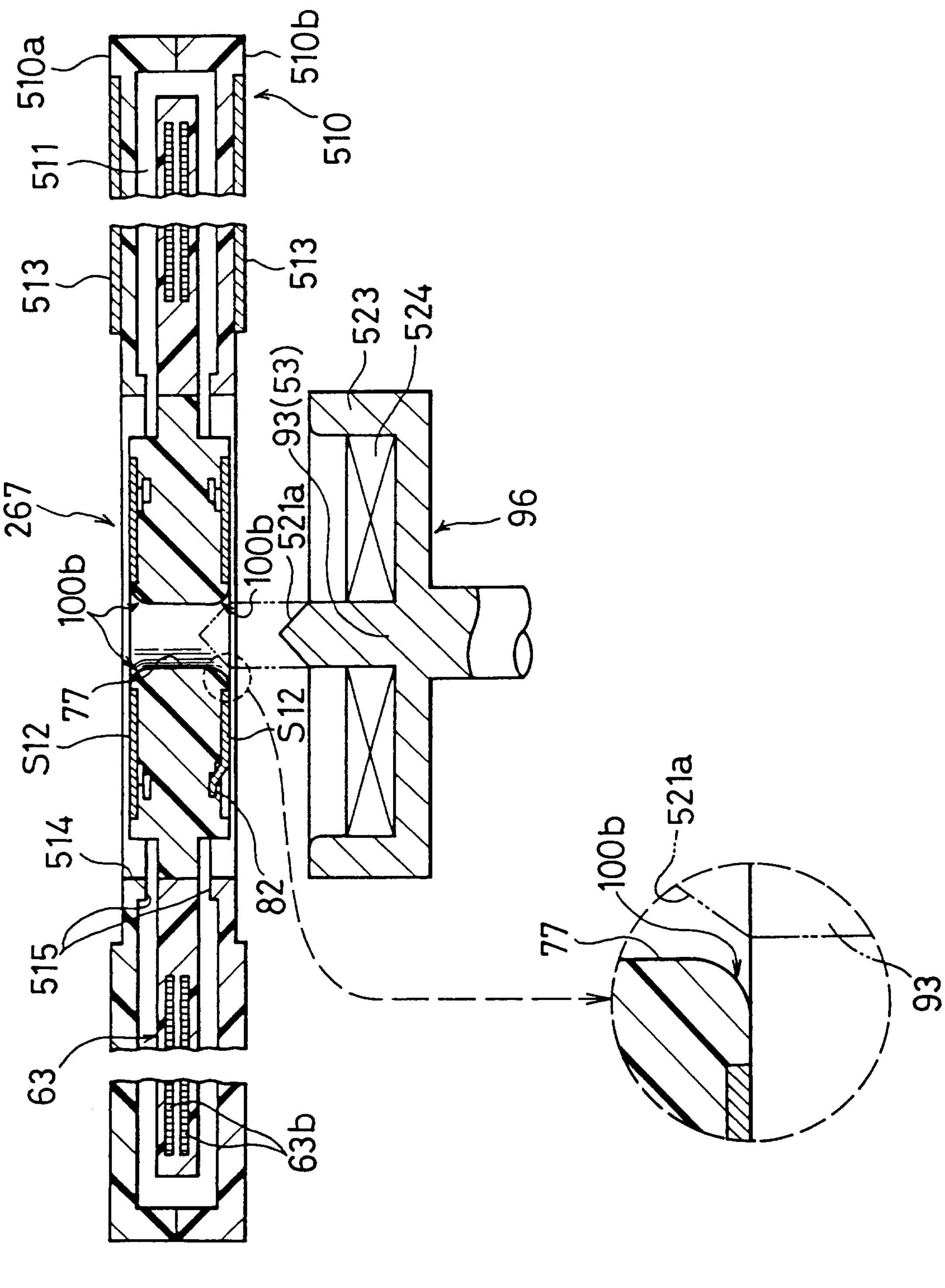
510a
510b
510
511
513
513
523
524
93(53)
521a
96
267
100b
100b
77
S12
S12
514
82
515
63
63b
100b
521a
77
93

Fig. 33 (A)

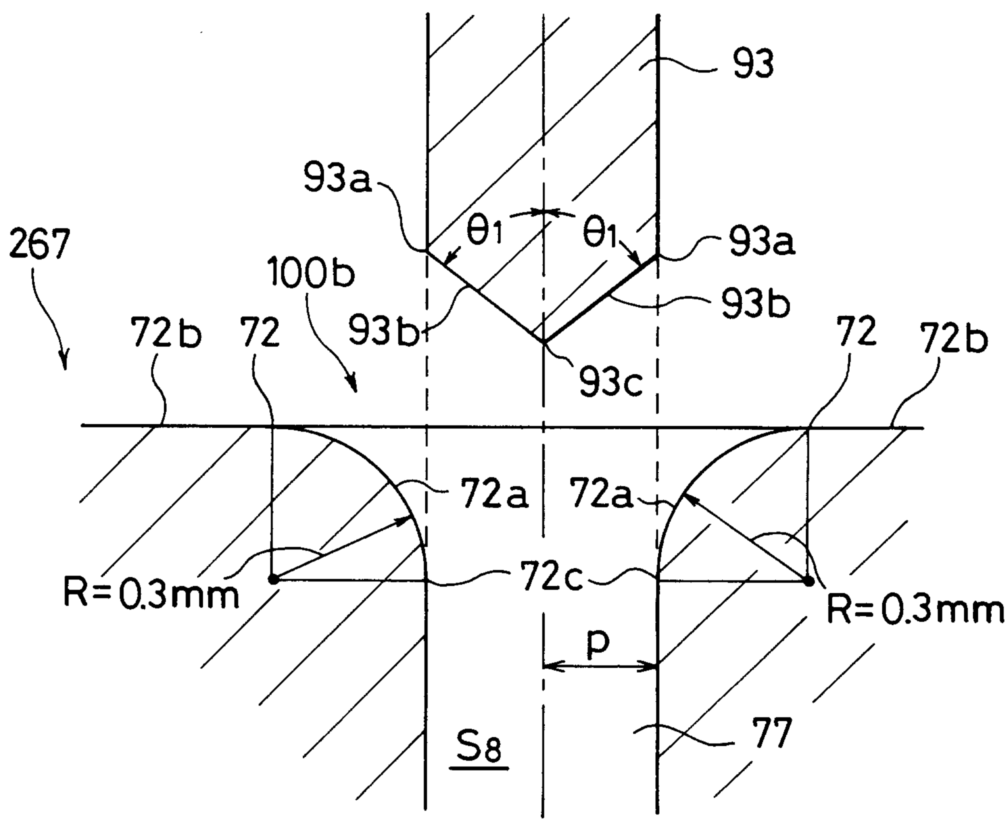
93
93a
θ1
θ1
93a
267
100b
93b
93b
72b
72
93c
72
72b
72a
72a
R=0.3mm
72c
R=0.3mm
p
S8
77

*Fig. 33 (B)*

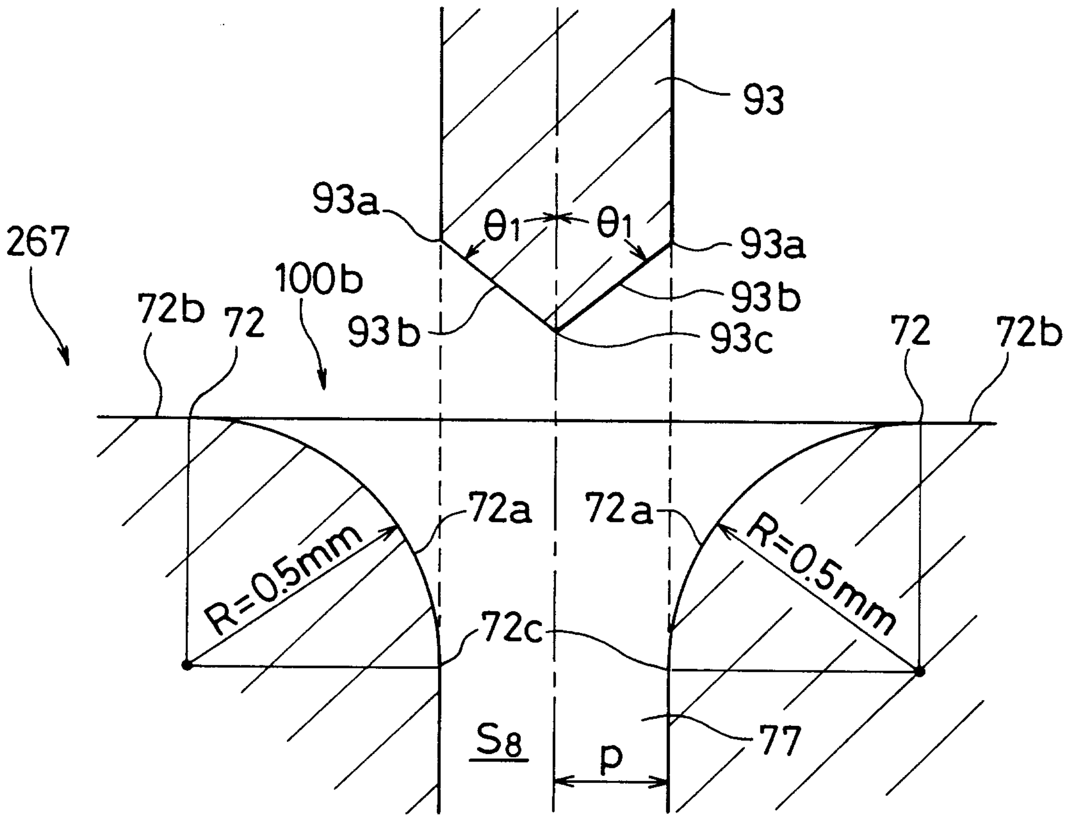
93
93a
θ1
θ1
93a
267
100b
93b
72b
72
93b
93c
72
72b
72a
72a
R=0.5mm
R=0.5mm
72c
S8
p
77

Fig. 34 (a)

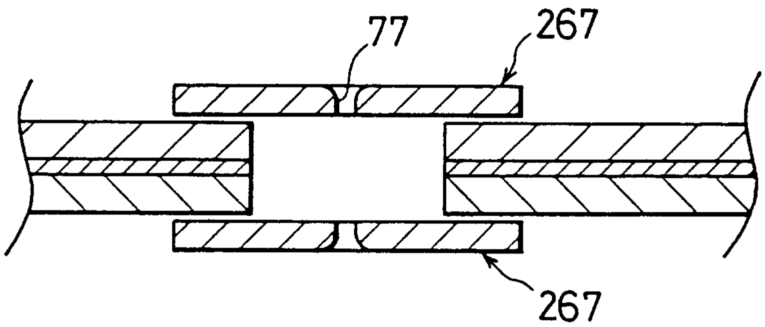


Fig. 34 (b)

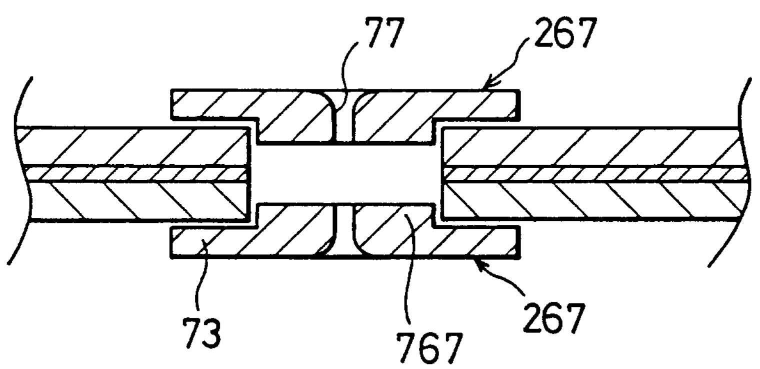

Fig. 35 (a)

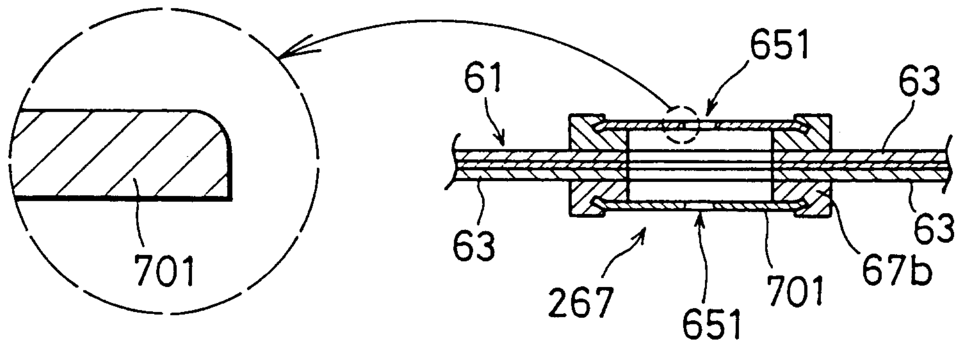


Fig. 35 (b)

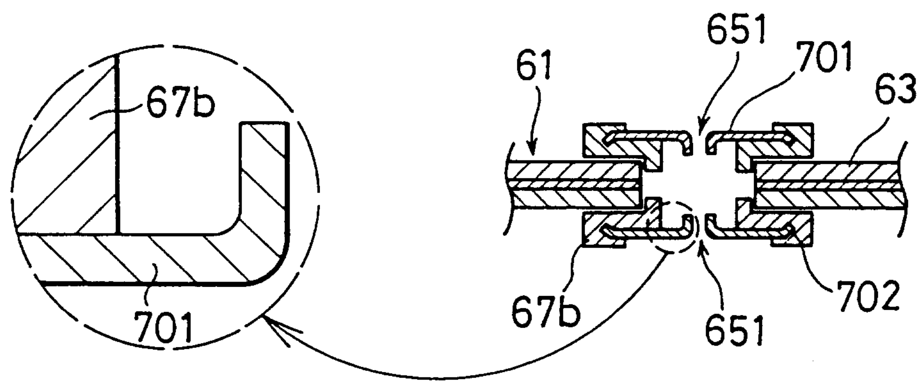

*Fig. 36*

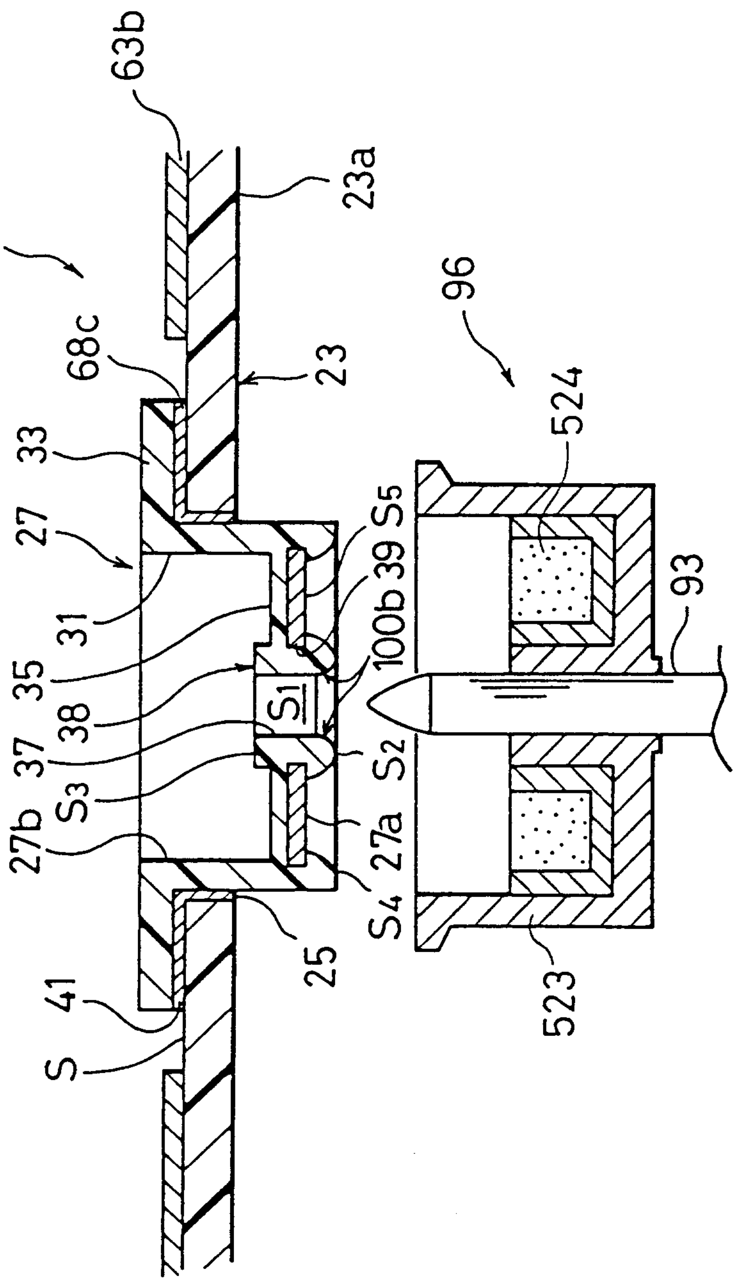

63b
21
23a
96
68c
23
524
33
27
S5
39
100b
93
31
35
38
S1
37
S2
S3
27b
27a
S4
25
41
S
523

*Fig. 37*

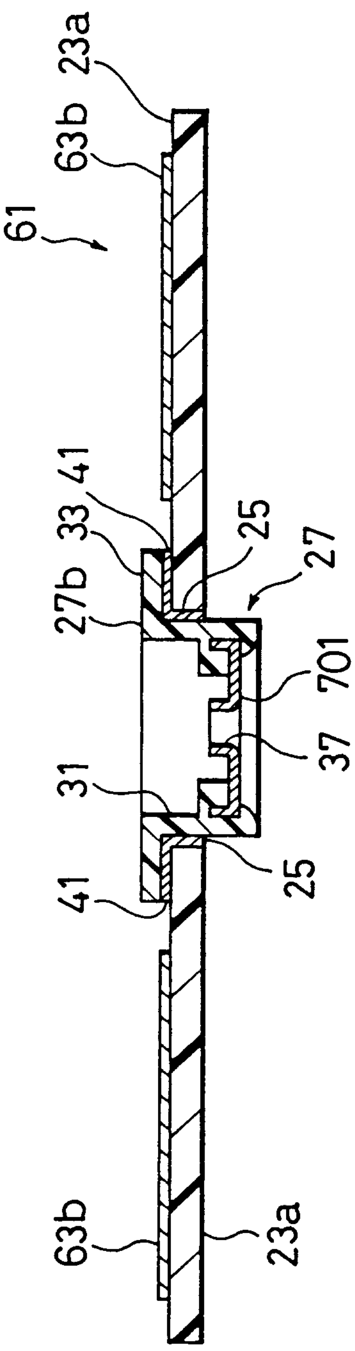

Fig. 38

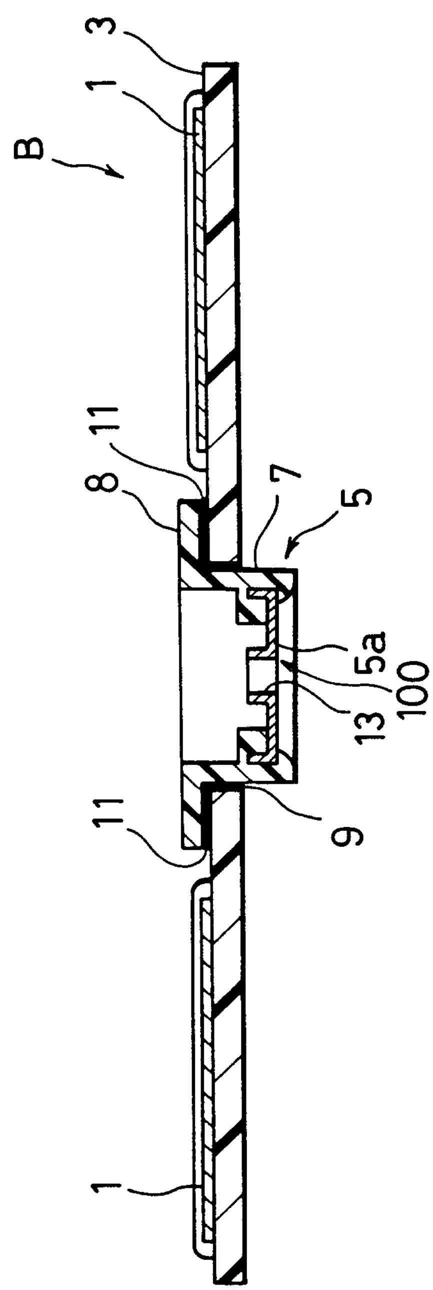

Fig. 39

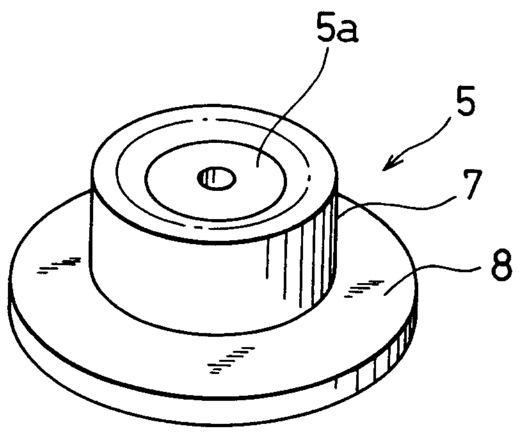

# INTERNATIONAL SEARCH REPORT

International Application No PCT/JP92/00984

**I. CLASSIFICATION OF SUBJECT MATTER** (if several classification symbols apply, indicate all) [6]

According to International Patent Classification (IPC) or to both National Classification and IPC

Int. $Cl^5$ G11B23/00, 7/24, 5/82

**II. FIELDS SEARCHED**

Minimum Documentation Searched [7]

| Classification System | Classification Symbols |
|---|---|
| IPC | G11B23/00, 7/24, 5/82 |

Documentation Searched other than Minimum Documentation to the Extent that such Documents are Included in the Fields Searched [8]

| | |
|---|---|
| Jitsuyo Shinan Koho | 1969 - 1992 |
| Kokai Jitsuyo Shinan Koho | 1971 - 1992 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 62-222475 (Toshiba Corp.), September 30, 1987 (30. 09. 87), & EP, A2, 230963 | 1, 3, 4, 7-9 |
| X | JP, A, 63-152071 (Fuji Photo Film Co., Ltd.), June 24, 1988 (24. 06. 88), (Family: none) | 1, 3, 4, 11-16, 21 |
| X | JP, A, 63-152072 (Fuji Photo Film Co., Ltd.), June 24, 1988 (24. 06. 88), (Family: none) | 1, 3, 4, 7-10 |
| X | JP, A, 63-187482 (Hitachi, Ltd.), August 3, 1988 (03. 08. 88), (Family: none) | 1, 3 |
| X | JP, A, 63-201928 (Asahi Chemical Industry Co., Ltd.), August 22, 1988 (22. 08. 88), (Family: none) | 1, 3, 4, 7, 9, 10 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| August 27, 1992 (27. 08. 92) | September 22, 1992 (22. 09. 92) |
| **International Searching Authority** | **Signature of Authorized Officer** |
| Japanese Patent Office | |

**FURTHER INFORMATION CONTINUED FROM THE SECOND SHEET**

| | | |
|---|---|---|
| X | JP, U, 64-23773 (Sony Corp.), February 8, 1989 (08. 02. 89), (Family: none) | 1, 3, 4, 11-16, 21 |
| X | JP, U, 64-42574 (Mitsubishi Kasei Corp.), March 14, 1989 (14. 03. 89), (Family: none) | 1, 3, 4, 7-9 |
| X | JP, A, 3-12884 (Toshiba Corp.), January 21, 1991 (21. 01. 91), (Family: none) | 1, 3, 4, 17-19, 21 |
| X | JP, U, 61-158619 (Hitachi Maxell, Ltd.), October 1, 1986 (01. 10. 86), (Family: none) | 1, 4, 7 |

**V. ☐ OBSERVATIONS WHERE CERTAIN CLAIMS WERE FOUND UNSEARCHABLE [1]**

This international search report has not been established in respect of certain claims under Article 17(2) (a) for the following reasons:

1. ☐ Claim numbers , because they relate to subject matter not required to be searched by this Authority, namely:

2. ☐ Claim numbers , because they relate to parts of the international application that do not comply with the prescribed requirements to such an extent that no meaningful international search can be carried out, specifically:

3. ☐ Claim numbers , because they are dependent claims and are not drafted in accordance with the second and third sentences of PCT Rule 6.4(a).

**VI. ☐ OBSERVATIONS WHERE UNITY OF INVENTION IS LACKING [2]**

This International Searching Authority found multiple inventions in this international application as follows:

1. ☐ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

**FURTHER INFORMATION CONTINUED FROM THE SECOND SHEET**

| | | |
|---|---|---|
| Y | JP, U, 2-96667 Microfilm (Fuji Photo Film Co., Ltd.), August 1, 1990 (01. 08. 90), (Family: none) | 2, 5 |
| Y | JP, A, 2-27573 (Mitsui Petrochemical Industries, Ltd.), July 15, 1990 (15. 07. 90), (Family: none) | 1, 3, 4, 7-10 |
| Y | JP, U, 62-77745 (Sony Corp.), May 18, 1987 (18. 05. 87), (Family: none) | 1, 4, 17-19 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers , because they relate to subject matter not required to be searched by this Authority, namely:

2.☐ Claim numbers , because they relate to parts of the international application that do not comply with the prescribed requirements to such an extent that no meaningful international search can be carried out, specifically:

3.☐ Claim numbers , because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP92/00984

**FURTHER INFORMATION CONTINUED FROM THE SECOND SHEET**

| | | |
|---|---|---|
| Y | JP, U, 61-3573 (Sankyo Seiki Mfg. Co., Ltd.), January 10, 1986 (10. 01. 86), (Family: none) | 17-18 |
| A | JP, A, 60-106027 (Hitachi Maxell, Ltd.), June 11, 1985 (11. 06. 85), (Family: none) | 20 |
| A | JP, A, 59-178659 (Fuji Photo Film Co., Ltd.), October 9, 1984 (09. 10. 84), & US, A, 4523246 | 20 |

**V. ☐ OBSERVATIONS WHERE CERTAIN CLAIMS WERE FOUND UNSEARCHABLE [1]**

This international search report has not been established in respect of certain claims under Article 17(2) (a) for the following reasons:

1. ☐ Claim numbers , because they relate to subject matter not required to be searched by this Authority, namely:

2. ☐ Claim numbers , because they relate to parts of the international application that do not comply with the prescribed requirements to such an extent that no meaningful international search can be carried out, specifically:

3. ☐ Claim numbers , because they are dependent claims and are not drafted in accordance with the second and third sentences of PCT Rule 6.4(a).

**VI. ☐ OBSERVATIONS WHERE UNITY OF INVENTION IS LACKING [2]**

This International Searching Authority found multiple inventions in this international application as follows:

1. ☐ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP92/00984

**FURTHER INFORMATION CONTINUED FROM THE SECOND SHEET**

| | | |
|---|---|---|
| P | JP, A, 3-219477 (Mitsui Petrochemical Industries, Ltd.), September 26, 1991 (26. 09. 91), (Family: none) | 7-10 |
| P | JP, U, 4-2374 (Sony Corp.), January 9, 1992 (09. 01. 92), (Family: none) | 17-18 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers , because they relate to subject matter not required to be searched by this Authority, namely:

2.☐ Claim numbers , because they relate to parts of the international application that do not comply with the prescribed requirements to such an extent that no meaningful international search can be carried out, specifically:

3.☐ Claim numbers , because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.